# EUROPEAN PATENT APPLICATION

(11) **EP 3 232 720 A1**
(43) Date of publication of application: **18.10.2017**
(21) Application number: 14909532.5
(22) Date of filing: 31.12.2014
(51) Int. Cl.: H04W 68/02

(54) **MESSAGE PROCESSING METHOD, NODE DEVICE, AND USER EQUIPMENT**

(71) Applicant: Huawei Technologies Co., Ltd., Longgang District Shenzhen, Guangdong 518129 (CN)
(72) Inventor: ZHANG, Liangliang, Shenzhen Guangdong 518129 (CN); LIN, Bo, Shenzhen Guangdong 518129 (CN)
(74) Representative: Pfenning, Meinig & Partner mbB
(86) International application number: PCT/CN2014/095998
(87) International publication number: WO 2016/106725

(57) **Abstract**

The present invention discloses a message processing method, a node device, and user equipment. In the present invention, a second node determines a first message, where the first message is used to instruct user equipment to receive a system message of a first node cell or used to indicate that a system message of a first node cell is updated; and the second node sends the first message to the user equipment. By means of the present invention, the user equipment can reside on the second node and be paged by the second node, and a first node does not need to perform paging, thereby reducing an air interface resource.

## Description

### TECHNICAL FIELD

The present invention relates to the field of communications technologies, and in particular, to a message processing method, a node device, and user equipment.

### BACKGROUND

With continuous development of Long Term Evolution (Long Term Evolution, LTE) technologies, cooperative services among base stations appear, to meet various different service requirements.

A heterogeneous network (HetNet) deployment as a new network deployment is gradually being introduced into a next-generation developed wireless network. In a HetNet, some low power nodes are deployed within coverage of or on an edge of coverage of a macro base station to which a macro cell (Macro cell) belongs, and coverage of the low power nodes is smaller than the coverage of the macro base station. The low power nodes are, for example, a remote radio head (Remote Radio Head, RRH), a small base station (Pico eNodeB, Pico eNB), a home base station (Home eNodeB, H eNB), a relay device (Relay Node, RN), an access point (Access Point, AP), or a terminal. Because the coverage of these low power nodes is smaller than the coverage of the macro base station, the low power stations may also be referred to as a mini base station or a micro base station in the heterogeneous network. In the HetNet, the micro base station and the macro base station may jointly provide a service for user equipment (User Equipment, UE).

In a heterogeneous network in which both a micro base station and a macro base station are deployed, UE is quite likely to reside on a micro base station. There is more than one micro base station in a tracking area (Tracking Area, TA). To page UE in an idle state, all macro base stations and micro base stations in the entire tracking area (Tracking Area, TA) need to send a paging message. Therefore, a large quantity of messages need to be sent over an air interface, resulting in a waste of air interface resources, and increasing network load.

Embodiments of the present invention provide a message processing method, a node device, and user equipment, to reduce an air interface resource.

According to a first aspect, a node device is provided, including a transmitter, a memory, and a processor, where
the memory is configured to store program code executed by the processor; and
the processor is configured to: call a program stored in the memory, to determine a first message, and control the transmitter to send the first message to user equipment, where the first message is used to instruct the user equipment to receive a system message of a first node cell or used to indicate that a system message of a first node cell is updated.

With reference to the first aspect, in a first implementation manner, the first message includes at least one of the following:
a paging configuration parameter of the first node cell, an identifier of a first node, an identifier of the first node cell, a system message indicator of the first node cell, system message content of the first node cell, or updated system message content of the first node cell.

With reference to the first aspect or the first implementation manner of the first aspect, in a second implementation manner, the first message is a configuration message, a paging message, or a system message.

With reference to the first aspect, in a third implementation manner, the first message is a paging message, and the paging message includes at least one of the following:
an identifier of a first node, an identifier of the first node cell, or a system message indicator of the first node cell.

With reference to any one of the first aspect, or the first implementation manner of the first aspect to the third implementation manner of the first aspect, in a fourth implementation manner, the first message is a paging message; and
the processor is further configured to control the transmitter to send, before sending the first message to the user equipment, a fourth message to the user equipment, where the fourth message includes a paging configuration parameter.

With reference to the first aspect, in a fifth implementation manner, the first message is a configuration message or a system message, and the configuration message or the system message includes a paging configuration parameter of the first node cell.

With reference to the first aspect, in a sixth implementation manner, the first message is further used to:
indicate that a system message of a second node cell corresponding to the node device is updated, or used to instruct the user equipment to receive a system message of a second node cell corresponding to the node device.

With reference to any one of the first aspect, or the first implementation manner of the first aspect to the sixth implementation manner of the first aspect, in a seventh implementation manner, the processor is further configured to: before the first message is determined, receive a third message sent by the first node, where the third message is used to indicate that the system message of the first node cell is updated, or used to instruct the user equipment to receive the system message of the first node cell.

With reference to the seventh implementation manner of the first aspect, in an eighth implementation manner, the third message includes at least one of: the paging configuration parameter of the first node cell, the identifier of the first node, the identifier of the first node cell, the system message indicator of the first node cell, the system message content of the first node cell, or the updated system message content of the first node cell.

With reference to any one of the first aspect, or the first implementation manner of the first aspect to the eighth implementation manner of the first aspect, in a ninth implementation manner, the user equipment camps on the second node cell corresponding to the node device.

With reference to any one of the first aspect, or the first implementation manner of the first aspect to the ninth implementation manner of the first aspect, in a tenth implementation manner, the user equipment receives a paging message only from the second node cell corresponding to the node device; or
the user equipment receives a paging message in the second node cell corresponding to the node device, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the first aspect, the ninth implementation manner of the first aspect, or the tenth implementation manner of the first aspect, in an eleventh implementation manner,
the user equipment receives the system message of the first node cell; and/or
the user equipment measures the first node cell.

According to a second aspect, a node device is provided, including a transmitter, a memory, and a processor, where
the memory is configured to store program code executed by the processor; and
the processor is configured to: call a program stored in the memory, to determine first node information and a fifth message, and control the transmitter to send the first node information and the fifth message to user equipment, where the fifth message is used to page the user equipment, or used to instruct the user equipment to access a network, or used to instruct the user equipment to establish a radio resource control RRC connection, and the first node information is used to provide information about a first node to the user equipment.

With reference to the second aspect, in a first implementation manner, the first node information includes at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the second aspect, in a second implementation manner, the first node information includes an identifier of a first node cell or an identifier of the first node, and the first node information is included in a second message.

With reference to the second aspect or the second implementation manner of the second aspect, in a third implementation manner, the first node information includes an access configuration of the first node, and the access configuration of the first node is included in the second message that is sent to the user equipment by the node device.

With reference to the second implementation manner of the second aspect or the third implementation manner of the second aspect, in a fourth implementation manner, the second message is the fifth message.

With reference to any one of the second aspect, or the first implementation manner of the second aspect to the fourth implementation manner of the second aspect, in a fifth implementation manner, the fifth message is a paging message.

With reference to the second implementation manner of the second aspect or the third implementation manner of the second aspect, in a sixth implementation manner, the second message includes:
a radio resource control RRC connection reconfiguration message or a system message.

With reference to any one of the second aspect, or the first implementation manner of the second aspect to the sixth implementation manner of the second aspect, in a seventh implementation manner, the user equipment camps on a second node cell corresponding to the node device.

With reference to any one of the second aspect, or the first implementation manner of the second aspect to the seventh implementation manner of the second aspect, in an eighth implementation manner, the user equipment receives a paging message only from the second node cell corresponding to the node device; or
the user equipment receives a paging message in the second node cell corresponding to the node device, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the second aspect, the seventh implementation manner of the second aspect, or the eighth implementation manner of the second aspect, in a ninth implementation manner,
the user equipment receives a system message of the first node cell; and/or
the user equipment measures the first node cell.

According to a third aspect, user equipment is provided, including a receiver, a memory, and a processor, where
the memory is configured to store program code executed by the processor; and
the processor is configured to: call a program stored in the memory, to receive, by using the receiver, a first message sent by a second node, and receive, by using the receiver, a system message of a first node cell or an updated system message of a first node cell according to the first message, where the first message is used to instruct the user equipment to receive the system message of the first node cell, or used to instruct the user equipment to receive the updated system message of the first node cell.

With reference to the third aspect, in a first implementation manner, the first message includes at least one of: a paging configuration parameter of the first node cell, an identifier of a first node, an identifier of the first node cell, a system message indicator of the first node cell, system message content of the first node cell, or updated system message content of the first node cell.

With reference to the third aspect or the first implementation manner of the third aspect, in a second implementation manner, the first message is a configuration message, a paging message, or a system message.

With reference to the third aspect, in a third implementation manner, the first message is a paging message, and the paging message includes at least one of the following: an identifier of a first node, an identifier of the first node cell, or a system message indicator of the first node cell; and
the processor is specifically configured to:
receive the system message of the first node cell or the updated system message of the first node cell in the first node cell according to the paging message.

With reference to any one of the third aspect, or the first implementation manner of the third aspect to the third implementation manner of the third aspect, in a fourth implementation manner, the first message is a paging message;
the processor is further configured to:
before the second receiving unit receives the system message of the first node cell or receives the updated system message of the first node cell according to the first message, receive a fourth message sent by the second node, where the fourth message includes the paging configuration parameter of the first node cell; and
the processor is further configured to determine a paging time according to the paging configuration parameter of the first node cell; and
receive a paging message in a second node cell within the determined paging time, where the paging message is used to indicate that a system message of the first node is updated or used to instruct the user equipment to receive the system message of the first node cell.

With reference to the third aspect, in a fifth implementation manner, the first message is a configuration message or a system message, and the configuration message or the system message includes a paging configuration parameter of the first node cell;
the processor is further configured to:
before the system message of the first node cell or the updated system message of the first node cell is received according to the first message, determine a paging time according to the paging configuration parameter of the first node cell; and
the processor is further configured to:
receive a paging message in the first node cell within the determined paging time, where the paging message is used to indicate that a system message of a first node is updated or used to instruct the user equipment to receive the system message of the first node cell.

With reference to any one of the third aspect, or the first implementation manner of the third aspect to the fifth implementation manner of the third aspect, in a sixth implementation manner, the processor is further configured to:
receive an updated system message of the second node cell or a system message of the second node cell in the second node cell according to the first message.

With reference to any one of the third aspect, or the first implementation manner of the third aspect to the sixth implementation manner of the third aspect, in a seventh implementation manner,
the user equipment camps on the second node cell corresponding to the second node.

With reference to any one of the third aspect, or the first implementation manner of the third aspect to the seventh implementation manner of the third aspect, in an eighth implementation manner, the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the third aspect, the seventh implementation manner of the third aspect, or the eighth implementation manner of the third aspect, in a ninth implementation manner,
the user equipment receives the system message of the first node cell; and/or
the user equipment measures the first node cell.

According to a fourth aspect, user equipment is provided, including a receiver, a memory, and a processor, where
the memory is configured to store program code executed by the processor; and
the processor is configured to: call a program stored in the memory, to receive, by using the receiver, a fifth message sent by a second node and first node information, and control the user equipment to access a first node according to the first node information and the fifth message, where the fifth message is used to page the user equipment, or used to instruct the user equipment to access a network, or used to instruct the user equipment to establish a radio resource control RRC connection, and the first node information is used to provide information about the first node to the user equipment.

With reference to the fourth aspect, in a first implementation manner, the first node information includes at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the fourth aspect, in a second implementation manner, the first node information includes an identifier of a first node cell or an identifier of the first node, and the first node information is included in a second message.

With reference to the second implementation manner of the fourth aspect, in a third implementation manner, the processor is specifically configured to control the user equipment to access the first node according to the fifth message and the first node information in the following manner:
determining the first node cell according to the identifier of the first node or the identifier of the first node cell that is included in the fifth message;
listening to a system message of the first node cell in the first node cell;
obtaining an access configuration of the first node according to the received system message of the first node cell; and
controlling, according to the obtained access configuration of the first node, the user equipment to access the first node.

With reference to the fourth aspect or the second implementation manner of the fourth aspect, in a fourth implementation manner, the first node information includes the access configuration of the first node, and the access configuration of the first node is included in the second message.

With reference to the fourth implementation manner of the fourth aspect, in a fifth implementation manner, the processor is specifically configured to control the user equipment to access the first node according to the fifth message and the first node information in the following manner:
determining, according to the fifth message, that the user equipment is paged, or is paged to access a network, or is paged to establish an RRC connection; and
controlling, according to the access configuration of the first node included in the second message, the user equipment to access the first node.

With reference to the fourth implementation manner of the fourth aspect, in a sixth implementation manner, the processor is specifically configured to control the user equipment to access the first node according to the fifth message and the first node information in the following manner:
determining, according to the identifier of the first node cell or the identifier of the first node that is included in the fifth message, that a node that the user equipment needs to access is the first node corresponding to the identifier of the first node cell or the identifier of the first node; and
accessing the first node according to the access configuration of the first node included in the second message.

With reference to the fourth implementation manner of the fourth aspect, in a seventh implementation manner, the processor is specifically configured to control the user equipment to access the first node according to the fifth message and the first node information in the following manner:
determining, according to the fifth message, that the user equipment is paged, or is paged to access a network, or is paged to establish an RRC connection;
receiving the second message, where the second message includes the access configuration of the first node; and
controlling, according to the access configuration of the first node included in the second message, the user equipment to access the first node.

With reference to the second implementation manner of the fourth aspect or the fourth implementation manner of the fourth aspect, in an eighth implementation manner, the second message is the fifth message.

With reference to any one of the fourth aspect, or the first implementation manner of the fourth aspect to the eighth implementation manner of the fourth aspect, in a ninth implementation manner, the fifth message is a paging message.

With reference to the second implementation manner of the fourth aspect or the fourth implementation manner of the fourth aspect, in a tenth implementation manner, the second message is sent to the user equipment by the first node, the second node, or a third node.

With reference to any one of the fourth aspect, or the first implementation manner of the fourth aspect to the tenth implementation manner of the fourth aspect, in an eleventh implementation manner, the user equipment camps on a second node cell corresponding to the second node.

With reference to any one of the fourth aspect, or the first implementation manner of the fourth aspect to the eleventh implementation manner of the fourth aspect, in a twelfth implementation manner,
the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the fourth aspect, the eleventh implementation manner of the fourth aspect, or the twelfth implementation manner of the fourth aspect, in a thirteenth implementation manner,
the user equipment receives the system message of the first node cell; and/or
the user equipment measures the first node cell.

According to a fifth aspect, a node device is provided, including:
a determining unit, configured to determine a first message, where the first message is used to instruct user equipment to receive a system message of a first node cell or used to indicate that a system message of a first node cell is updated; and
a sending unit, configured to send the first message determined by the determining unit to the user equipment.

With reference to the fifth aspect, in a first implementation manner, the first message includes at least one of the following:
a paging configuration parameter of the first node cell, an identifier of a first node, an identifier of the first node cell, a system message indicator of the first node cell, system message content of the first node cell, or updated system message content of the first node cell.

With reference to the fifth aspect or the first implementation manner of the fifth aspect, in a second implementation manner, the first message is a configuration message, a paging message, or a system message.

With reference to the fifth aspect, in a third implementation manner, the first message is a paging message, and the paging message includes at least one of the following:
an identifier of a first node, an identifier of the first node cell, or a system message indicator of the first node cell.

With reference to any one of the fifth aspect, or the first implementation manner of the fifth aspect to the third implementation manner of the fifth aspect, in a fourth implementation manner, the first message is a paging message; and
the sending unit is further configured to: before sending the first message to the user equipment, send a fourth message to the user equipment, where the fourth message includes a paging configuration parameter.

With reference to the fifth aspect, in a fifth implementation manner, the first message is a configuration message or a system message, and the configuration message or the system message includes a paging configuration parameter of the first node cell.

With reference to the fifth aspect, in a sixth implementation manner, the first message is further used to:
indicate that a system message of a second node cell corresponding to the node device is updated, or used to instruct the user equipment to receive a system message of a second node cell corresponding to the node device.

With reference to any one of the fifth aspect, or the first implementation manner of the fifth aspect to the sixth implementation manner of the fifth aspect, in a seventh implementation manner, the node device further includes:
a receiving unit, configured to: before the determining unit determines the first message, receive a third message sent by the first node, where the third message is used to indicate that the system message of the first node cell is updated, or used to instruct the user equipment to receive the system message of the first node cell.

With reference to the seventh implementation manner of the fifth aspect, in an eighth implementation manner, the third message includes at least one of: the paging configuration parameter of the first node cell, the identifier of the first node, the identifier of the first node cell, the system message indicator of the first node cell, the system message content of the first node cell, or the updated system message content of the first node cell.

With reference to any one of the fifth aspect, or the first implementation manner of the fifth aspect to the eighth implementation manner of the fifth aspect, in a ninth implementation manner, the user equipment camps on the second node cell corresponding to the node device.

With reference to any one of the fifth aspect, or the first implementation manner of the fifth aspect to the ninth implementation manner of the fifth aspect, in a tenth implementation manner, the user equipment receives a paging message only from the second node cell corresponding to the node device; or
the user equipment receives a paging message in the second node cell corresponding to the node device, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the fifth aspect, the ninth implementation manner of the fifth aspect, or the tenth implementation manner of the fifth aspect, in an eleventh implementation manner,
the user equipment receives the system message of the first node cell; and/or
the user equipment measures the first node cell.

According to a sixth aspect, a node device is provided, including:
a determining unit, configured to determine first node information and a fifth message, where the fifth message is used to page user equipment, or used to instruct user equipment to access a network, or used to instruct user equipment to establish a radio resource control RRC connection, and the first node information is used to provide information about a first node to the user equipment; and
a sending unit, configured to send the first node information and the fifth message determined by the determining unit to the user equipment.

With reference to the sixth aspect, in a first implementation manner, the first node information includes at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the sixth aspect, in a second implementation manner, the first node information includes an identifier of a first node cell or an identifier of the first node, and the first node information is included in a second message.

With reference to the sixth aspect or the second implementation manner of the sixth aspect, in a third implementation manner, the first node information includes an access configuration of the first node, and the access configuration of the first node is included in the second message that is sent to the user equipment by the node device.

With reference to the second implementation manner of the sixth aspect or the third implementation manner of the sixth aspect, in a fourth implementation manner, the second message is the fifth message.

With reference to any one of the sixth aspect, or the first implementation manner of the sixth aspect to the fourth implementation manner of the sixth aspect, in a fifth implementation manner, the fifth message is a paging message.

With reference to the second implementation manner of the sixth aspect or the third implementation manner of the sixth aspect, in a sixth implementation manner, the second message includes:
a radio resource control RRC connection reconfiguration message or a system message.

With reference to any one of the sixth aspect, or the first implementation manner of the sixth aspect to the sixth implementation manner of the sixth aspect, in a seventh implementation manner, the user equipment camps on a second node cell corresponding to the node device.

With reference to any one of the sixth aspect, or the first implementation manner of the sixth aspect to the seventh implementation manner of the sixth aspect, in an eighth implementation manner, the user equipment receives a paging message only from the second node cell corresponding to the node device; or
the user equipment receives a paging message in the second node cell corresponding to the node device, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the sixth aspect, the seventh implementation manner of the sixth aspect, or the eighth implementation manner of the sixth aspect, in a ninth implementation manner,
the user equipment receives a system message of the first node cell; and/or
the user equipment measures the first node cell.

According to a seventh aspect, user equipment is provided, including:
a first receiving unit, configured to receive a first message sent by a second node, where the first message is used to instruct the user equipment to receive a system message of a first node cell, or used to instruct the user equipment to receive an updated system message of a first node cell; and
a second receiving unit, configured to receive the system message of the first node cell or receive the updated system message of the first node cell according to the first message received by the first receiving unit.

With reference to the seventh aspect, in a first implementation manner, the first message includes at least one of: a paging configuration parameter of the first node cell, an identifier of a first node, an identifier of the first node cell, a system message indicator of the first node cell, system message content of the first node cell, or updated system message content of the first node cell.

With reference to the seventh aspect or the first implementation manner of the seventh aspect, in a second implementation manner, the first message is a configuration message, a paging message, or a system message.

With reference to the seventh aspect, in a third implementation manner, the first message is a paging message, and the paging message includes at least one of the following: an identifier of a first node, an identifier of the first node cell, or a system message indicator of the first node cell; and
the second receiving unit is specifically configured to:
receive the system message of the first node cell or the updated system message of the first node cell in the first node cell according to the paging message.

With reference to any one of the seventh aspect, or the first implementation manner of the seventh aspect to the third implementation manner of the seventh aspect, in a fourth implementation manner, the first message is a paging message;
the first receiving unit is further configured to:
before the second receiving unit receives the system message of the first node cell or receives the updated system message of the first node cell according to the first message, receive a fourth message sent by the second node, where the fourth message includes the paging configuration parameter of the first node cell;
the user equipment further includes:
   a determining unit, configured to determine a paging time according to the paging configuration parameter of the first node cell; and
   the first receiving unit is further configured to:
receive a paging message in a second node cell within the paging time determined by the determining unit, where the paging message is used to indicate that a system message of the first node is updated or used to instruct the user equipment to receive the system message of the first node cell.

With reference to the seventh aspect, in a fifth implementation manner, the first message is a configuration message or a system message, and the configuration message or the system message includes a paging configuration parameter of the first node cell;
the user equipment further includes:
a determining unit, configured to: before the second receiving unit receives the system message of the first node cell or receives the updated system message of the first node cell according to the first message, determine a paging time according to the paging configuration parameter of the first node cell; and
the first receiving unit is further configured to:
   receive a paging message in the first node cell within the paging time determined by the determining unit, where the paging message is used to indicate that a system message of a first node is updated or used to instruct the user equipment to receive the system message of the first node cell.

With reference to any one of the seventh aspect, or the first implementation manner of the seventh aspect to the fifth implementation manner of the seventh aspect, in a sixth implementation manner, the second receiving unit is further configured to:
receive an updated system message of the second node cell or a system message of the second node cell in the second node cell according to the first message.

With reference to any one of the seventh aspect, or the first implementation manner of the seventh aspect to the sixth implementation manner of the seventh aspect, in a seventh implementation manner,
the user equipment camps on the second node cell corresponding to the second node.

With reference to any one of the seventh aspect, or the first implementation manner of the seventh aspect to the seventh implementation manner of the seventh aspect, in an eighth implementation manner, the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the seventh aspect, the seventh implementation manner of the seventh aspect, or the eighth implementation manner of the seventh aspect, in a ninth implementation manner, the user equipment receives the system message of the first node cell; and/or
the user equipment measures the first node cell.

According to an eighth aspect, user equipment is provided, including:
a receiving unit, configured to receive a fifth message sent by a second node and first node information, where the fifth message is used to page the user equipment, or used to instruct the user equipment to access a network, or used to instruct the user equipment to establish a radio resource control RRC connection, and the first node information is used to provide information about a first node to the user equipment; and
an access unit, configured to access the first node according to the first node information and the fifth message received by the receiving unit.

With reference to the eighth aspect, in a first implementation manner, the first node information includes at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the eighth aspect, in a second implementation manner, the first node information includes an identifier of a first node cell or an identifier of the first node, and the first node information is included in a second message.

With reference to the second implementation manner of the eighth aspect, in a third implementation manner, the access unit is specifically configured to access the first node according to the fifth message and the first node information in the following manner:
determining the first node cell according to the identifier of the first node or the identifier of the first node cell that is included in the fifth message;
listening to a system message of the first node cell in the first node cell;
obtaining an access configuration of the first node according to the received system message of the first node cell; and
accessing the first node according to the obtained access configuration of the first node.

With reference to the eighth aspect or the second implementation manner of the eighth aspect, in a fourth implementation manner, the first node information includes the access configuration of the first node, and the access configuration of the first node is included in the second message.

With reference to the fourth implementation manner of the eighth aspect, in a fifth implementation manner, the access unit is specifically configured to access the first node according to the fifth message and the first node information in the following manner:
determining, according to the fifth message, that the user equipment is paged, or is paged to access a network, or is paged to establish an RRC connection; and
accessing the first node according to the access configuration of the first node included in the second message.

With reference to the fourth implementation manner of the eighth aspect, in a sixth implementation manner, the access unit is specifically configured to access the first node according to the fifth message and the first node information in the following manner:
determining, according to the identifier of the first node cell or the identifier of the first node that is included in the fifth message, that a node that the user equipment needs to access is the first node corresponding to the identifier of the first node cell or the identifier of the first node; and
accessing the first node according to the access configuration of the first node included in the second message.

With reference to the fourth implementation manner of the eighth aspect, in a seventh implementation manner, the access unit is specifically configured to access the first node according to the fifth message and the first node information in the following manner:
determining, according to the fifth message, that the user equipment is paged, or is paged to access a network, or is paged to establish an RRC connection;
receiving the second message, where the second message includes the access configuration of the first node; and
accessing the first node according to the access configuration of the first node included in the second message.

With reference to the second implementation manner of the eighth aspect or the fourth implementation manner of the eighth aspect, in an eighth implementation manner, the second message is the fifth message.

With reference to any one of the eighth aspect, or the first implementation manner of the eighth aspect to the eighth implementation manner of the eighth aspect, in a ninth implementation manner, the fifth message is a paging message.

With reference to the second implementation manner of the eighth aspect or the fourth implementation manner of the eighth aspect, in a tenth implementation manner, the second message is sent to the user equipment by the first node, the second node, or a third node.

With reference to any one of the eighth aspect, or the first implementation manner of the eighth aspect to the tenth implementation manner of the eighth aspect, in an eleventh implementation manner, the user equipment camps on a second node cell corresponding to the second node.

With reference to any one of the eighth aspect, or the first implementation manner of the eighth aspect to the eleventh implementation manner of the eighth aspect, in a twelfth implementation manner,
the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the eighth aspect, the eleventh implementation manner of the eighth aspect, or the twelfth implementation manner of the eighth aspect, in a thirteenth implementation manner,
the user equipment receives the system message of the first node cell; and/or
the user equipment measures the first node cell.

According to a ninth aspect, a message processing method is provided, including:
determining, by a second node, a first message, where the first message is used to instruct user equipment to receive a system message of a first node cell or used to indicate that a system message of a first node cell is updated; and
sending, by the second node, the first message to the user equipment.

With reference to the ninth aspect, in a first implementation manner, the first message includes at least one of the following:
a paging configuration parameter of the first node cell, an identifier of a first node, an identifier of the first node cell, a system message indicator of the first node cell, system message content of the first node cell, or updated system message content of the first node cell.

With reference to the ninth aspect or the first implementation manner of the ninth aspect, in a second implementation manner, the first message is a configuration message, a paging message, or a system message.

With reference to the ninth aspect, in a third implementation manner, the first message is a paging message, and the paging message includes at least one of the following:
an identifier of a first node, an identifier of the first node cell, or a system message indicator of the first node cell.

With reference to any one of the ninth aspect, or the first implementation manner of the ninth aspect to the third implementation manner of the ninth aspect, in a fourth implementation manner, the first message is a paging message; and
before the sending, by the second node, the first message to the user equipment, the method further includes:
sending, by the second node, a fourth message to the user equipment, where the fourth message includes a paging configuration parameter.

With reference to the ninth aspect, in a fifth implementation manner, the first message is a configuration message or a system message, and the configuration message or the system message includes a paging configuration parameter of the first node cell.

With reference to the ninth aspect, in a sixth implementation manner, the first message is further used to:
indicate that a system message of a second node cell is updated, or used to instruct the user equipment to receive a system message of a second node cell.

With reference to any one of the ninth aspect, or the first implementation manner of the ninth aspect to the sixth implementation manner of the ninth aspect, in a seventh implementation manner, before the determining, by a second node, a first message, the method further includes:
receiving, by the second node, a third message sent by the first node, where the third message is used to indicate that the system message of the first node cell is updated, or used to instruct the user equipment to receive the system message of the first node cell.

With reference to the seventh implementation manner of the ninth aspect, in an eighth implementation manner, the third message includes at least one of: the paging configuration parameter of the first node cell, the identifier of the first node, the identifier of the first node cell, the system message indicator of the first node cell, the system message content of the first node cell, or the updated system message content of the first node cell.

With reference to any one of the ninth aspect, or the first implementation manner of the ninth aspect to the eighth implementation manner of the ninth aspect, in a ninth implementation manner, the user equipment camps on the second node cell corresponding to the second node.

With reference to any one of the ninth aspect, or the first implementation manner of the ninth aspect to the ninth implementation manner of the ninth aspect, in a tenth implementation manner, the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the ninth aspect, the ninth implementation manner of the ninth aspect, or the tenth implementation manner of the ninth aspect, in an eleventh implementation manner,
the user equipment receives the system message of the first node cell; and/or
the user equipment measures the first node cell.

According to a tenth aspect, a message processing method is provided, including:
determining, by a second node, first node information and a fifth message, where the fifth message is used to page the user equipment, or used to instruct the user equipment to access a network, or used to instruct the user equipment to establish a radio resource control RRC connection, and the first node information is used to provide information about a first node to the user equipment; and
sending, by the second node, the first node information and the fifth message to the user equipment.

With reference to the tenth aspect, in a first implementation manner, the first node information includes at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the tenth aspect, in a second implementation manner, the first node information includes an identifier of a first node cell or an identifier of the first node, and the first node information is included in a second message.

With reference to the tenth aspect or the second implementation manner of the tenth aspect, in a third implementation manner, the first node information includes an access configuration of the first node, and the access configuration of the first node is included in the second message that is sent to the user equipment by the second node.

With reference to the second implementation manner of the tenth aspect or the third implementation manner of the tenth aspect, in a fourth implementation manner, the second message is the fifth message.

With reference to any one of the tenth aspect, or the first implementation manner of the tenth aspect to the fourth implementation manner of the tenth aspect, in a fifth implementation manner, the fifth message is a paging message.

With reference to the second implementation manner of the tenth aspect or the third implementation manner of the tenth aspect, in a sixth implementation manner, the second message includes:
a radio resource control RRC connection reconfiguration message or a system message.

With reference to any one of the tenth aspect, or the first implementation manner of the tenth aspect to the sixth implementation manner of the tenth aspect, in a seventh implementation manner, the user equipment camps on a second node cell corresponding to the second node.

With reference to any one of the tenth aspect, or the first implementation manner of the tenth aspect to the seventh implementation manner of the tenth aspect, in an eighth implementation manner, the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the tenth aspect, the seventh implementation manner of the tenth aspect, or the eighth implementation manner of the tenth aspect, in a ninth implementation manner,
the user equipment receives a system message of the first node cell; and/or
the user equipment measures the first node cell.

According to an eleventh aspect, a message processing method is provided, including:
receiving, by user equipment, a first message sent by a second node, where the first message is used to instruct the user equipment to receive a system message of a first node cell; and
receiving, by the user equipment, the system message of the first node cell according to the first message; or
receiving, by user equipment, a first message sent by a second node, where the first message is used to instruct the user equipment to receive an updated system message of a first node cell; and
receiving, by the user equipment, the updated system message of the first node cell according to the first message.

With reference to the eleventh aspect, in a first implementation manner, the first message includes at least one of: a paging configuration parameter of the first node cell, an identifier of a first node, an identifier of the first node cell, a system message indicator of the first node cell, system message content of the first node cell, or updated system message content of the first node cell.

With reference to the eleventh aspect or the first implementation manner of the eleventh aspect, in a second implementation manner, the first message is a configuration message, a paging message, or a system message.

With reference to the eleventh aspect, in a third implementation manner, the first message is a paging message, and the paging message includes at least one of the following: an identifier of a first node, an identifier of the first node cell, or a system message indicator of the first node cell; and
the user equipment receives the system message of the first node cell or the updated system message of the first node cell in the first node cell according to the paging message.

With reference to any one of the eleventh aspect, or the first implementation manner of the eleventh aspect to the third implementation manner of the eleventh aspect, in a fourth implementation manner, the first message is a paging message; and
before the receiving, by the user equipment, the system message of the first node cell or receiving the updated system message of the first node cell according to the first message, the method further includes:
receiving, by the user equipment, a fourth message sent by the second node, where the fourth message includes the paging configuration parameter of the first node cell;
determining a paging time according to the paging configuration parameter of the first node cell; and
receiving, by the user equipment, a paging message in a second node cell within the paging time, where the paging message is used to indicate that a system message of the first node is updated or used to instruct the user equipment to receive the system message of the first node cell.

With reference to the eleventh aspect, in a fifth implementation manner, the first message is a configuration message or a system message, and the configuration message or the system message includes a paging configuration parameter of the first node cell; before the receiving, by the user equipment, the system message of the first node cell or receiving the updated system message of the first node cell according to the first message, the method further includes:
determining a paging time according to the paging configuration parameter of the first node cell; and
receiving, by the user equipment, a paging message in the first node cell within the paging time, where the paging message is used to indicate that a system message of a first node is updated or used to instruct the user equipment to receive the system message of the first node cell.

With reference to any one of the eleventh aspect, or the first implementation manner of the eleventh aspect to the fifth implementation manner of the eleventh aspect, in a sixth implementation manner, the method further includes:
receiving, by the user equipment, an updated system message of the second node cell or a system message of the second node cell in the second node cell according to the first message.

With reference to any one of the eleventh aspect, or the first implementation manner of the eleventh aspect to the sixth implementation manner of the eleventh aspect, in a seventh implementation manner,
the user equipment camps on the second node cell corresponding to the second node.

With reference to any one of the eleventh aspect, or the first implementation manner of the eleventh aspect to the seventh implementation manner of the eleventh aspect, in an eighth implementation manner, the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the eleventh aspect, the seventh implementation manner of the eleventh aspect, or the eighth implementation manner of the eleventh aspect, in a ninth implementation manner,
the user equipment receives the system message of the first node cell; and/or
the user equipment measures the first node cell.

According to a twelfth aspect, a message processing method is provided, including:
receiving, by user equipment, a fifth message sent by a second node and first node information, where the fifth message is used to page the user equipment, or used to instruct the user equipment to access a network, or used to instruct the user equipment to establish a radio resource control RRC connection, and the first node information is used to provide information about a first node to the user equipment; and
accessing, by the user equipment, the first node according to the first node information and the fifth message.

With reference to the twelfth aspect, in a first implementation manner, the first node information includes at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

With reference to the twelfth aspect, in a second implementation manner, the first node information includes an identifier of a first node cell or an identifier of the first node, and the first node information is included in a second message.

With reference to the second implementation manner of the twelfth aspect, in a third implementation manner, the accessing, by the user equipment, the first node according to the fifth message and the first node information includes:
determining, by the user equipment, the first node cell according to the identifier of the first node or the identifier of the first node cell that is included in the fifth message;
listening, by the user equipment, to a system message of the first node cell in the first node cell;
obtaining, by the user equipment, an access configuration of the first node according to the received system message of the first node cell; and
accessing, by the user equipment, the first node according to the obtained access configuration of the first node.

With reference to the twelfth aspect or the second implementation manner of the twelfth aspect, in a fourth implementation manner, the first node information includes the access configuration of the first node, and the access configuration of the first node is included in the second message.

With reference to the fourth implementation manner of the twelfth aspect, in a fifth implementation manner, the accessing, by the user equipment, the first node according to the fifth message and the first node information includes:
determining, by the user equipment according to the fifth message, that the user equipment is paged, or is paged to access a network, or is paged to establish an RRC connection; and
accessing, by the user equipment, the first node according to the access configuration of the first node included in the second message.

With reference to the fourth implementation manner of the twelfth aspect, in a sixth implementation manner, the accessing, by the user equipment, the first node according to the fifth message and the first node information includes:
determining, by the user equipment according to the identifier of the first node cell or the identifier of the first node that is included in the fifth message, that a node that the user equipment needs to access is the first node corresponding to the identifier of the first node cell or the identifier of the first node; and
accessing, by the user equipment, the first node according to the access configuration of the first node included in the second message.

With reference to the fourth implementation manner of the twelfth aspect, in a seventh implementation manner, the accessing, by the user equipment, the first node according to the fifth message and the first node information includes:
determining, by the user equipment according to the fifth message, that the user equipment is paged, or is paged to access a network, or is paged to establish an RRC connection;
receiving, by the user equipment, the second message sent by the second node, where the second message includes the access configuration of the first node; and
accessing, by the user equipment, the first node according to the access configuration of the first node included in the second message.

With reference to the second implementation manner of the twelfth aspect or the fourth implementation manner of the twelfth aspect, in an eighth implementation manner, the second message is the fifth message.

With reference to any one of the twelfth aspect, or the first implementation manner of the twelfth aspect to the eighth implementation manner of the twelfth aspect, in a ninth implementation manner, the fifth message is a paging message.

With reference to the second implementation manner of the twelfth aspect or the fourth implementation manner of the twelfth aspect, in a tenth implementation manner, the second message is sent to the user equipment by the first node, the second node, or a third node.

With reference to any one of the twelfth aspect, or the first implementation manner of the twelfth aspect to the tenth implementation manner of the twelfth aspect, in an eleventh implementation manner, the user equipment camps on a second node cell corresponding to the second node.

With reference to any one of the twelfth aspect, or the first implementation manner of the twelfth aspect to the eleventh implementation manner of the twelfth aspect, in a twelfth implementation manner,
the user equipment receives a paging message only from the second node cell corresponding to the second node; or
the user equipment receives a paging message in the second node cell corresponding to the second node, and the user equipment receives a paging message in the first node cell, where
the paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

With reference to the twelfth aspect, the eleventh implementation manner of the twelfth aspect, or the twelfth implementation manner of the twelfth aspect, in a thirteenth implementation manner,
the user equipment receives the system message of the first node cell; and/or
the user equipment measures the first node cell.

By means of the message processing method, the node device, and the user equipment provided in the embodiments of the present invention, a second node determines a first message, and sends the determined first message to user equipment, where the first message is used to instruct the user equipment to receive a system message of a first node cell or used to indicate that a system message of a first node cell is updated; the user equipment can receive the system message of the first node cell or an updated system message of the first node cell according to the received first message sent by the second node. In this way, the user equipment can reside on the second node and be paged by the second node, and a first node does not need to perform paging, thereby reducing an air interface resource.

### BRIEF DESCRIPTION OF DRAWINGS

FIG. 1 is a schematic compositional diagram of a node device according to an embodiment of the present invention;
FIG. 2 is a schematic compositional diagram of another node device according to an embodiment of the present invention;
FIG. 3 is a schematic compositional diagram of user equipment according to an embodiment of the present invention;
FIG. 4 is a schematic compositional diagram of another user equipment according to an embodiment of the present invention;
FIG. 5A to FIG. 5B are schematic compositional diagrams of still another node device according to an embodiment of the present invention;
FIG. 6 is a schematic compositional diagram of yet another node device according to an embodiment of the present invention;
FIG. 7A to FIG. 7B are schematic compositional diagrams of still another user equipment according to an embodiment of the present invention;
FIG. 8 is a schematic compositional diagram of yet another user equipment according to an embodiment of the present invention;
FIG. 9A to FIG. 9I are flowcharts of a message processing method according to an embodiment of the present invention;
FIG. 10A to FIG. 10D are flowcharts of a message processing method according to another embodiment of the present invention;
FIG. 11A to FIG. 11J are flowcharts of a message processing method according to still another embodiment of the present invention;
FIG. 12A to FIG. 12E are flowcharts of a message processing method according to yet another embodiment of the present invention;
FIG. 13A to FIG. 13E are schematic interaction diagrams of a message processing method according to an embodiment of the present invention; and
FIG. 14A to FIG. 14C are schematic interaction diagrams of a message processing method according to another embodiment of the present invention.

### DESCRIPTION OF EMBODIMENTS

The following clearly describes the technical solutions in the embodiments of the present invention with reference to the accompanying drawings in the embodiments of the present invention.

In a heterogeneous network in which both a micro base station and a macro base station are deployed, to avoid a waste of air interface resources, a feasible implementation manner is to let UE camp on the macro base station, and control the UE not to receive a paging message in a micro cell corresponding to the micro base station. However, a paging message is usually used to notify the UE that a system message is updated. If the UE does not receive a paging message in a mini cell, the UE cannot receive an updated system message of the micro cell in a timely manner.

The embodiments of the present invention provide a message processing method, a node device, and user equipment, to enable UE to camp on a node cell (for example, a cell A of a second node) in a heterogeneous network. For a cell (for example, a cell B of a first node) of another node on which the UE does not camp, optionally, the UE may measure the cell and/or listen to a system message. For the cell (for example, the cell B of the first node) of the another node on which the UE does not camp, a function of sending a paging message is not supported, or only a paging message used to notify a first earthquake and tsunami warning system (Earthquake and Tsunami Warning System, ETWS) related notification and/or a second ETWS related notification or a paging message used to announce a commercial mobile alert service (Commercial Mobile Alert Service, CMAS) notification is sent. Therefore, for the UE, the UE camps on a node cell, and receives a paging message and a system message in the cell. In addition, for the cell (for example, a second node cell B) of the another node on which the UE does not camp, especially, for example, a cell in which signal quality is good, the UE may not receive a paging message in such a cell or receive only an ETWS related paging message and/or a CMAS related paging message. Optionally, the UE performs measurement and/or receives a system message in such a cell, and thereby determines signal quality of the cell. When a network pages the UE to access the network or the UE needs to access a network, the UE can access the network by using the second node cell B. In this way, on one hand, the UE obtains, by using the second node cell A, information indicating that a network pages the UE. On the other hand, when the UE needs to access a network, the UE initiates an access to a non-resident cell having good signal quality (for example, the first node cell B. The first node cell B is merely used as an example for description, and the UE may continuously switch a node to ensure a cell having good signal quality). In addition, for a cell (for example, the first node cell B) on which the UE does not camp, paging may not be sent, or only a paging message used to notify a first earthquake and tsunami warning system (Earthquake and Tsunami Warning System, ETWS) related notification and/or a second ETWS related notification or a paging message used to announce a commercial mobile alert service (Commercial Mobile Alert Service, CMAS) notification is sent. Therefore, a large amount of air interface signaling can be saved. In the embodiments of the present invention, for ease of description, a cell on which the UE does not camp is referred to as a first node cell, and a cell on which the UE camps is referred to as a second node cell. That is, the UE camps on a second node cell corresponding to the second node. The UE receives a paging message only from the second node cell corresponding to the second node; or the UE receives a paging message in the second node cell corresponding to the second node, and the UE receives a paging message in the first node cell. The paging message that is received by the UE in the first node cell includes at least one of the following: a paging message used to notify a first earthquake and tsunami warning system ETWS related notification and/or a second ETWS related notification; or a paging message used to announce a commercial mobile alert service CMAS notification. The UE receives a system message of the first node cell; and/or the UE measures the first node cell. It should be noted that, content of the present invention is not merely limited to being applicable to the foregoing scenario.

The second node in the embodiments of the present invention may be various devices such as a macro base station (Macro eNB), a remote radio head (Remote Radio Head, RRH), a small base station (Pico eNodeB, Pico eNB), a home base station (Home eNodeB, HeNB), a relay device (Relay Node, RN), an access point (Access Point, AP), an eNB, an SeNB (Secondary eNB), an MeNB (Master eNB), or a terminal. This is not limited in the present invention. The second node cell is a cell of the second node, and may be, for example, a micro cell (small cell), a macro cell (Macro cell), a Scell (Secondary Cell), a PScell (primary cell), a Pcell (primary cell), an SCG (secondary cell group), or an MCG (master cell group).

Similarly, the first node in the embodiments of the present invention may be various devices such as a macro base station (Macro eNB), a remote radio head (Remote Radio Head, RRH), a small base station (Pico eNodeB, Pico eNB), a home base station (Home eNodeB, HeNB), a relay device (Relay Node, RN), an access point (Access Point, AP), an eNB, an SeNB (Secondary eNB), an MeNB (Master eNB), or a terminal. This is not limited in the present invention. The first node cell is a cell of the first node, and may be, for example, a micro cell (small cell), a macro cell (Macro cell), a Scell (Secondary Cell), a PScell (primary cell), an SCG (secondary cell group), or an MCG (master cell group).

Similarly, the second node is various devices such as a macro base station (Macro eNB), a remote radio head (Remote Radio Head, RRH), a small base station (Pico eNodeB, Pico eNB), a home base station (Home eNodeB, HeNB), a relay device (Relay Node, RN), an access point (Access Point, AP), an eNB, an SeNB (Secondary eNB), an MeNB (Master eNB), or a terminal. This is not limited in the present invention. The second node cell is a cell of the second node, and may be, for example, a macro cell (Macro cell), a micro cell (small cell), a Scell (Secondary Cell), a PScell (primary cell), an SCG (secondary cell group), or an MCG (master cell group).

To sum up, a device type of the first node or the second node is not limited in the present invention. It should be noted that, in all content described below in the embodiments of the present invention, the first node may be the first node cell. That is, the first node may be replaced with the first node cell. The second node may be the second node cell. That is, the second node may be replaced with the second node cell. The first node cell may also be referred to as a cell of the first node, and the second node cell may also be referred to as a cell of the second node. Especially in the claims, the first node as an execution body may be replaced with the first node cell, or the second node may be replaced with the second node cell.

It should be noted that, in the following embodiments of the present invention, an example in which a paging message is used to "page UE to access a network" is used. Specifically, the "page UE to access a network" may also be paging the UE, or paging the UE to establish an RRC connection, or instructing the UE to access a network, or instructing the UE to establish an RRC connection. This is not enumerated in the present invention.

It should be further noted that, the term "and/or" in the embodiments of the present invention is only an association relationship describing associated objects, and indicates that there are three relationships. For example, A and/or B may indicate three cases: there is only A, there are both A and B, and there is only B. In addition, the character "/" in this specification generally indicates an "or" relationship between the associated objects.

In the following embodiments of the present invention, an example in which the first node is a micro base station, and the second node is a macro base station is mainly used for description. When the first node is a micro base station, the first node cell may be a micro cell. When the second node is a macro base station, the second node cell may be a macro cell. Certainly, in an embodiment, it may also be that the first node may also be a macro base station, and the second node is a macro base station; or in an embodiment, it may be that the first node is a micro base station, and the second node is a micro base station. An example is used in the present invention merely for description, and the device type of the first node or the second node is not limited in the present invention.

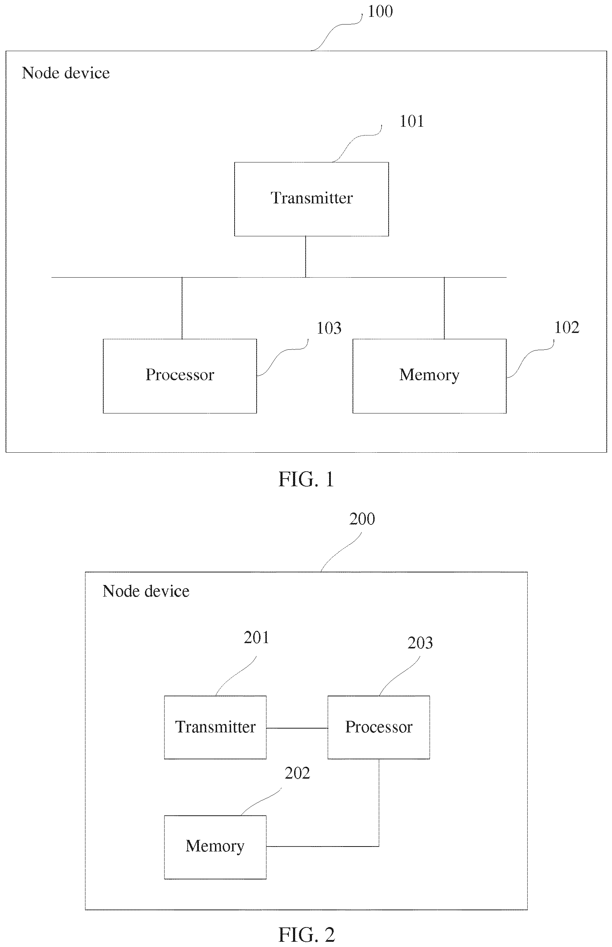

An embodiment of the present invention provides a node device 100. FIG. 1 is a schematic compositional diagram of the node device 100 provided in this embodiment of the present invention. As shown in FIG. 1, the node device 100 includes a transmitter 101, a memory 102, and a processor 103. Certainly, according to an actual situation, the node device 100 provided in this embodiment of the present invention may further include a communications bus. This is not limited in this embodiment of the present invention. In this embodiment of the present invention:

The memory 102 is configured to store program code executed by the processor 103.

The processor 103 is configured to: call a program stored in the memory 102, to determine a first message, and control the transmitter 101 to send the first message to user equipment, where the first message is used to instruct the user equipment to receive a system message of a first node cell or used to indicate that a system message of a first node cell is updated.

In a first implementation manner, the first message includes at least one of the following:
a paging configuration parameter of the first node cell, an identifier of a first node, an identifier of the first node cell, a system message indicator of the first node cell, system message content of the first node cell, or updated system message content of the first node cell.

In a second implementation manner, the first message is a configuration message, a paging message, or a system message.

In a third implementation manner, the first message is a paging message, and the paging message includes at least one of the following:
an identifier of a first node, an identifier of the first node cell, or a system message indicator of the first node cell.

In a fourth implementation manner, the first message is a paging message.

The processor 103 is further configured to control the transmitter 101 to send, before sending the first message to the user equipment, a fourth message to the user equipment, where the fourth message includes a paging configuration parameter.

In a fifth implementation manner, the first message is a configuration message or a system message, and the configuration message or the system message includes a paging configuration parameter of the first node cell.

In a sixth implementation manner, the first message is further used to:
indicate that a system message of a second node cell corresponding to the node device 100 is updated, or used to instruct the user equipment to receive a system message of a second node cell corresponding to the node device 100.

In a seventh implementation manner, the processor 103 is further configured to: before the first message is determined, receive a third message sent by the first node, where the third message is used to indicate that the system message of the first node cell is updated, or used to instruct the user equipment to receive the system message of the first node cell.

In an eighth implementation manner, the third message includes at least one of: the paging configuration parameter of the first node cell, the identifier of the first node, the identifier of the first node cell, the system message indicator of the first node cell, the system message content of the first node cell, or the updated system message content of the first node cell.

In a ninth implementation manner, the user equipment camps on the second node cell corresponding to the node device 100.

In a tenth implementation manner, the user equipment receives a paging message only from the second node cell corresponding to the node device 100; or
the user equipment receives a paging message in the second node cell corresponding to the node device 100, and the user equipment receives a paging message in the first node cell.

The paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

In an eleventh implementation manner,
the user equipment receives the system message of the first node cell; and/or
the user equipment measures the first node cell.

The node device 100 provided in this embodiment of the present invention determines a first message, and sends the determined first message to user equipment, where the first message is used to instruct the user equipment to receive a system message of a first node cell or used to indicate that a system message of a first node cell is updated; the user equipment can receive the system message of the first node cell or an updated system message of the first node cell according to the received first message sent by the second node. In this way, the user equipment can camp on the second node cell corresponding to the node device and be paged by the second node, and a first node does not need to perform paging, thereby reducing an air interface resource.

An embodiment of the present invention further provides a node device 200. FIG. 2 is a schematic compositional diagram of the node device 200 provided in this embodiment of the present invention. As shown in FIG. 2, the node device 200 includes a transmitter 201, a memory 202, and a processor 203. Certainly, according to an actual situation, the node device 200 provided in this embodiment of the present invention may further include a communications bus. This is not limited in this embodiment of the present invention. In this embodiment of the present invention:

The memory 202 is configured to store program code executed by the processor 203.

The processor 203 is configured to: call a program stored in the memory 202, to determine first node information and a fifth message, and control the transmitter 201 to send the first node information and the fifth message to user equipment, where the fifth message is used to page the user equipment, or used to instruct the user equipment to access a network, or used to instruct the user equipment to establish a radio resource control RRC connection, and the first node information is used to provide information about a first node to the user equipment.

In a first implementation manner, the first node information includes at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

In a second implementation manner, the first node information includes an identifier of a first node cell or an identifier of the first node, and the first node information is included in a second message.

In a third implementation manner, the first node information includes an access configuration of the first node, and the access configuration of the first node is included in the second message that is sent to the user equipment by the node device.

In a fourth implementation manner, the second message is the fifth message.

In a fifth implementation manner, the fifth message is a paging message.

In a sixth implementation manner, the second message includes:
a radio resource control RRC connection reconfiguration message or a system message.

In a seventh implementation manner, the user equipment camps on a second node cell corresponding to the node device.

In an eighth implementation manner, the user equipment receives a paging message only from the second node cell corresponding to the node device; or
the user equipment receives a paging message in the second node cell corresponding to the node device, and the user equipment receives a paging message in the first node cell.

The paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

In a ninth implementation manner,
the user equipment receives a system message of the first node cell; and/or
the user equipment measures the first node cell.

In this embodiment of the present invention, the node device 200 sends first node information to user equipment. Therefore, in this embodiment of the present invention, the user equipment can obtain, by using the first node information, information related to access to a first node. Therefore, when the second node sends, to the user equipment, a fifth message used to page the user equipment to access a network, and the user equipment receives the fifth message and learns that the user equipment needs to access the network, the user equipment not only can choose to access a second node cell corresponding to the node device 200, but also can choose to access the first node.

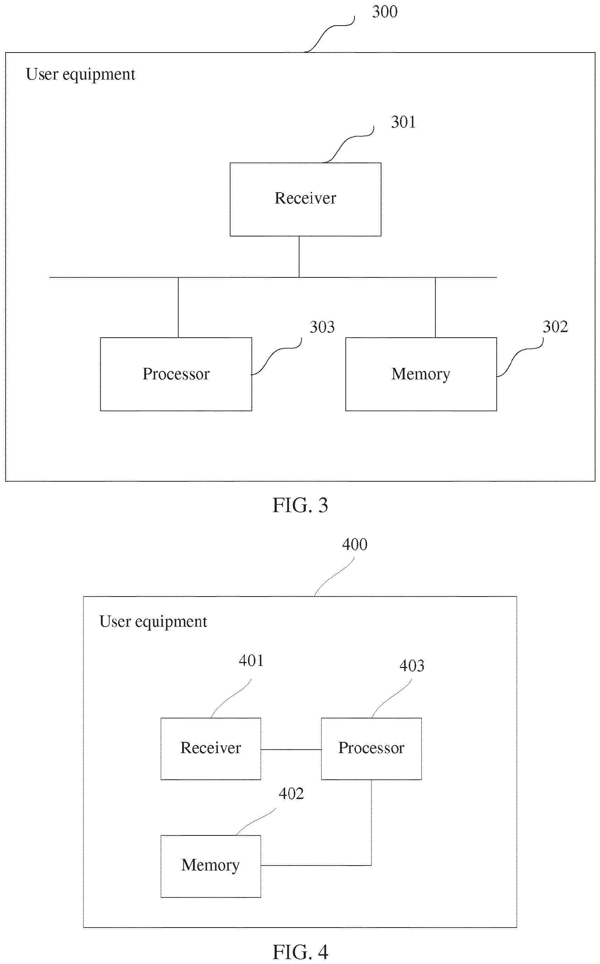

An embodiment of the present invention further provides user equipment 300. FIG. 3 is a schematic compositional diagram of the user equipment 300 provided in this embodiment of the present invention. As shown in FIG. 3, the user equipment 300 includes a receiver 301, a memory 302, and a processor 303. Certainly, according to an actual situation, the user equipment 300 provided in this embodiment of the present invention may further include a communications bus. This is not limited in this embodiment of the present invention. In this embodiment of the present invention:

The memory 302 is configured to store program code executed by the processor 303.

The processor 303 is configured to: call a program stored in the memory 302, to receive, by using the receiver 301, a first message sent by a second node, and receive, by using the receiver 301, a system message of a first node cell or an updated system message of a first node cell according to the first message, where the first message is used to instruct the user equipment 300 to receive the system message of the first node cell, or used to instruct the user equipment 300 to receive the updated system message of the first node cell.

In a first implementation manner, the first message includes at least one of: a paging configuration parameter of the first node cell, an identifier of a first node, an identifier of the first node cell, a system message indicator of the first node cell, system message content of the first node cell, or updated system message content of the first node cell.

In a second implementation manner, the first message is a configuration message, a paging message, or a system message.

In a third implementation manner, the first message is a paging message, and the paging message includes at least one of the following: an identifier of a first node, an identifier of the first node cell, or a system message indicator of the first node cell.

The processor 303 is specifically configured to:
receive the system message of the first node cell or the updated system message of the first node cell in the first node cell according to the paging message.

In a fourth implementation manner, the first message is a paging message.

The processor 303 is further configured to:
before the second receiving unit receives the system message of the first node cell or receives the updated system message of the first node cell according to the first message, receive a fourth message sent by the second node, where the fourth message includes the paging configuration parameter of the first node cell.

The processor 303 is further configured to determine a paging time according to the paging configuration parameter of the first node cell; and
receive a paging message in a second node cell within the determined paging time, where the paging message is used to indicate that a system message of the first node is updated or used to instruct the user equipment 300 to receive the system message of the first node cell.

In a fifth implementation manner, the first message is a configuration message or a system message, and the configuration message or the system message includes a paging configuration parameter of the first node cell.

The processor 303 is further configured to:
before the system message of the first node cell or the updated system message of the first node cell is received according to the first message, determine a paging time according to the paging configuration parameter of the first node cell.

The processor 303 is further configured to:
receive a paging message in the first node cell within the determined paging time, where the paging message is used to indicate that a system message of a first node is updated or used to instruct the user equipment 300 to receive the system message of the first node cell.

In a sixth implementation manner, the processor 303 is further configured to:
receive an updated system message of the second node cell or a system message of the second node cell in the second node cell according to the first message.

In a seventh implementation manner, the user equipment 300 camps on the second node cell corresponding to the second node.

In an eighth implementation manner, the user equipment 300 receives a paging message only from the second node cell corresponding to the second node; or
the user equipment 300 receives a paging message in the second node cell corresponding to the second node, and the user equipment 300 receives a paging message in the first node cell.

The paging message that is received by the user equipment 300 in the first node cell includes at least one of the following:
a paging message used to notify a first earthquake and tsunami warning system ETWS related notification and/or a second ETWS related notification; or
a paging message used to announce a commercial mobile alert service CMAS notification.

In a ninth implementation manner, the user equipment 300 receives the system message of the first node cell; and/or the user equipment 300 measures the first node cell.

In this embodiment of the present invention, the user equipment 300 receives a first message sent by a second node, where the first message is used to instruct the user equipment 300 to receive a system message of a first node cell or used to indicate that a system message of a first node cell is updated; the user equipment 300 can receive the system message of the first node cell or an updated system message of the first node cell according to the received first message sent by the second node. In this way, the user equipment can camp on a second node cell corresponding to the node device and be paged by the second node, and a first node does not need to perform paging, thereby reducing an air interface resource.

An embodiment of the present invention further provides user equipment 400. FIG. 4 is a schematic compositional diagram of the user equipment 400 provided in this embodiment of the present invention. As shown in FIG. 4, the user equipment 400 includes a receiver 401, a memory 402, and a processor 403. Certainly, according to an actual situation, the user equipment 400 provided in this embodiment of the present invention may further include a communications bus. This is not limited in this embodiment of the present invention. In this embodiment of the present invention:

The memory 402 is configured to store program code executed by the processor 403.

The processor 403 is configured to: call a program stored in the memory 402, to receive, by using the receiver 401, a fifth message sent by a second node and first node information, and control the user equipment 400 to access a first node according to the first node information and the fifth message, where the fifth message is used to page the user equipment 400, or used to instruct the user equipment 400 to access a network, or used to instruct the user equipment 400 to establish a radio resource control RRC connection, and the first node information is used to provide information about the first node to the user equipment 400.

In a first implementation manner, the first node information includes at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

In a second implementation manner, the first node information includes an identifier of a first node cell or an identifier of the first node, and the first node information is included in a second message.

In a third implementation manner, the processor 403 is specifically configured to control the user equipment 400 to access the first node according to the fifth message and the first node information in the following manner:
determining the first node cell according to the identifier of the first node or the identifier of the first node cell that is included in the fifth message;
listening to a system message of the first node cell in the first node cell;
obtaining an access configuration of the first node according to the received system message of the first node cell; and
controlling, according to the obtained access configuration of the first node, the user equipment 400 to access the first node.

In a fourth implementation manner, the first node information includes the access configuration of the first node, and the access configuration of the first node is included in the second message.

In a fifth implementation manner, the processor 403 is specifically configured to control the user equipment 400 to access the first node according to the fifth message and the first node information in the following manner:
determining, according to the fifth message, that the user equipment 400 is paged, or is paged to access a network, or is paged to establish an RRC connection; and
controlling, according to the access configuration of the first node included in the second message, the user equipment 400 to access the first node.

In a sixth implementation manner, the processor 403 is specifically configured to control the user equipment 400 to access the first node according to the fifth message and the first node information in the following manner:
determining, according to the identifier of the first node cell or the identifier of the first node that is included in the fifth message, that a node that the user equipment 400 needs to access is the first node corresponding to the identifier of the first node cell or the identifier of the first node; and
accessing the first node according to the access configuration of the first node included in the second message.

In a seventh implementation manner, the processor 403 is specifically configured to control the user equipment 400 to access the first node according to the fifth message and the first node information in the following manner:
determining, according to the fifth message, that the user equipment 400 is paged, or is paged to access a network, or is paged to establish an RRC connection;
receiving the second message, where the second message includes the access configuration of the first node; and
controlling, according to the access configuration of the first node included in the second message, the user equipment 400 to access the first node.

In an eighth implementation manner, the second message is the fifth message.

In a ninth implementation manner, the fifth message is a paging message.

In a tenth implementation manner, the second message is sent to the user equipment 400 by the first node, the second node, or a third node.

In an eleventh implementation manner, the user equipment 400 camps on a second node cell corresponding to the second node.

In a twelfth implementation manner, the user equipment 400 receives a paging message only from the second node cell corresponding to the second node; or
the user equipment 400 receives a paging message in the second node cell corresponding to the second node, and the user equipment 400 receives a paging message in the first node cell.

The paging message that is received by the user equipment 400 in the first node cell includes at least one of the following:
a paging message used to notify a first earthquake and tsunami warning system ETWS related notification and/or a second ETWS related notification; or
a paging message used to announce a commercial mobile alert service CMAS notification.

In a thirteenth implementation manner, the user equipment 400 receives the system message of the first node cell; and/or the user equipment 400 measures the first node cell.

In this embodiment of the present invention, the user equipment 400 receives first node information sent by a second node. Therefore, in this embodiment of the present invention, the user equipment 400 can obtain, by using the first node information, information related to access to a first node. Therefore, when the second node sends, to the user equipment 400, a fifth message used to page the user equipment 400 to access a network, and the user equipment 400 receives the fifth message and learns that the user equipment 400 needs to access the network, the user equipment 400 not only can choose to access a second node cell corresponding to the node device 200, but also can choose to access the first node.

It should be noted that, the memory in the foregoing embodiments of the present invention may be a read-only memory (English: read-only memory, ROM for short), or a random access memory (English: random access memory, RAM for short), or may be an electrically erasable programmable read-only memory (English: Electrically Erasable Programmable Read-Only Memory, EEPROM for short), a magnetic disk storage medium or another magnetic storage device, or any other medium that can be used to carry or store desired program code having a form of an instruction or a data structure and can be accessed by a computer, but is not limited thereto. For example, the memory may be a combination of the foregoing memories.

The processor in the embodiments of the present invention may be a general central processing unit.

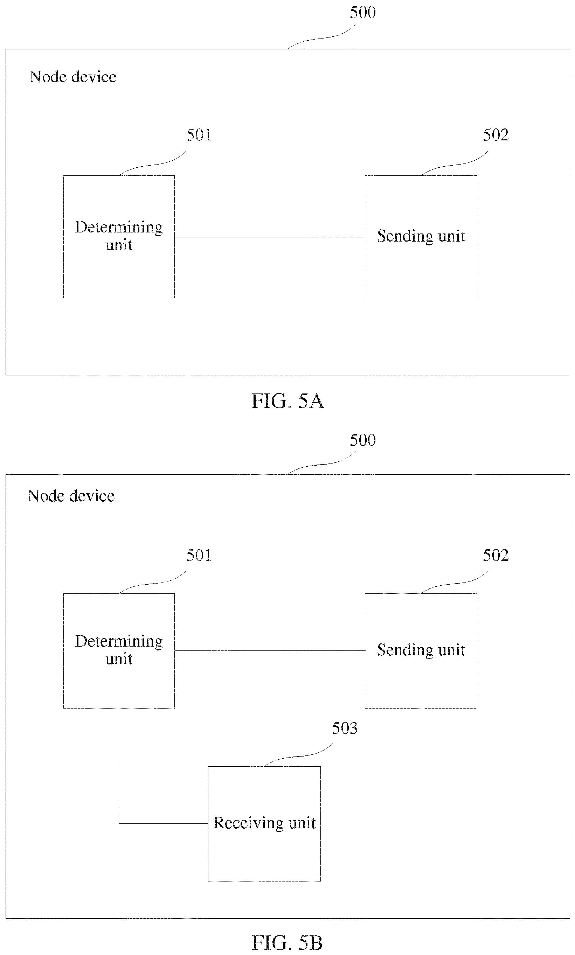

An embodiment of the present invention further provides a node device 500. FIG. 5A is a schematic compositional diagram of the node device 500 provided in this embodiment of the present invention. As shown in FIG. 5A, the node device 500 includes a determining unit 501 and a sending unit 502, as shown in FIG. 5.

The determining unit 501 is configured to determine a first message, where the first message is used to instruct user equipment to receive a system message of a first node cell or used to indicate that a system message of a first node cell is updated.

The sending unit 502 is configured to send the first message determined by the determining unit 501 to the user equipment.

In a first implementation manner, the first message includes at least one of the following:
a paging configuration parameter of the first node cell, an identifier of a first node, an identifier of the first node cell, a system message indicator of the first node cell, system message content of the first node cell, or updated system message content of the first node cell.

In a second implementation manner, the first message is a configuration message, a paging message, or a system message.

In a third implementation manner, the first message is a paging message, and the paging message includes at least one of the following:
an identifier of a first node, an identifier of the first node cell, or a system message indicator of the first node cell.

In a fourth implementation manner, the first message is a paging message.

The sending unit 502 is further configured to: before sending the first message to the user equipment, send a fourth message to the user equipment, where the fourth message includes a paging configuration parameter.

In a fifth implementation manner, the first message is a configuration message or a system message, and the configuration message or the system message includes a paging configuration parameter of the first node cell;

In a sixth implementation manner, the first message is further used to:
indicate that a system message of a second node cell corresponding to the node device is updated, or used to instruct the user equipment to receive a system message of a second node cell corresponding to the node device.

In a seventh implementation manner, the node device further includes a receiving unit 503, as shown in FIG. 5B.

The receiving unit 503 is configured to: before the determining unit 501 determines the first message, receive a third message sent by the first node, where the third message is used to indicate that the system message of the first node cell is updated, or used to instruct the user equipment to receive the system message of the first node cell.

In an eighth implementation manner, the third message includes at least one of: the paging configuration parameter of the first node cell, the identifier of the first node, the identifier of the first node cell, the system message indicator of the first node cell, the system message content of the first node cell, or the updated system message content of the first node cell.

In a ninth implementation manner, the user equipment camps on the second node cell corresponding to the node device 500.

In a tenth implementation manner, the user equipment receives a paging message only from the second node cell corresponding to the node device; or
the user equipment receives a paging message in the second node cell corresponding to the node device, and the user equipment receives a paging message in the first node cell.

The paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

In an eleventh implementation manner, the user equipment receives the system message of the first node cell; and/or the user equipment measures the first node cell.

The node device 500 provided in this embodiment of the present invention determines a first message, and sends the determined first message to user equipment, where the first message is used to instruct the user equipment to receive a system message of a first node cell or used to indicate that a system message of a first node cell is updated; the user equipment can receive the system message of the first node cell or an updated system message of the first node cell according to the received first message sent by the second node. In this way, the user equipment can camp on the second node cell corresponding to the node device and be paged by the second node, and a first node does not need to perform paging, thereby reducing an air interface resource.

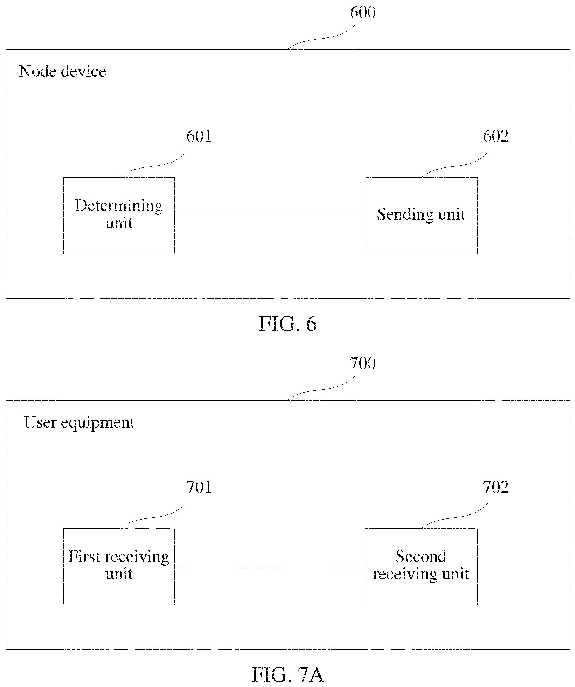

An embodiment of the present invention further provides a node device 600. FIG. 6 is a schematic compositional diagram of the node device 600 provided in this embodiment of the present invention. As shown in FIG. 6, the node device 600 includes a determining unit 601 and a sending unit 602.

The determining unit 601 is configured to determine first node information and a fifth message, where the fifth message is used to page user equipment, or used to instruct user equipment to access a network, or used to instruct user equipment to establish a radio resource control RRC connection, and the first node information is used to provide information about a first node to the user equipment.

The sending unit 602 is configured to send the first node information and the fifth message determined by the determining unit 601 to the user equipment.

In a first implementation manner, the first node information includes at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

In a second implementation manner, the first node information includes an identifier of a first node cell or an identifier of the first node, and the first node information is included in a second message.

In a third implementation manner, the first node information includes an access configuration of the first node, and the access configuration of the first node is included in the second message that is sent to the user equipment by the node device.

In a fourth implementation manner, the second message is the fifth message.

In a fifth implementation manner, the fifth message is a paging message.

In a sixth implementation manner, the second message includes:
a radio resource control RRC connection reconfiguration message or a system message.

In a seventh implementation manner, the user equipment camps on a second node cell corresponding to the node device.

In an eighth implementation manner, the user equipment receives a paging message only from the second node cell corresponding to the node device; or
the user equipment receives a paging message in the second node cell corresponding to the node device, and the user equipment receives a paging message in the first node cell.

The paging message that is received by the user equipment in the first node cell includes at least one of the following:
a paging message used to notify a first earthquake and tsunami warning system ETWS related notification and/or a second ETWS related notification; or
a paging message used to announce a commercial mobile alert service CMAS notification.

In a ninth implementation manner, the user equipment receives a system message of the first node cell; and/or the user equipment measures the first node cell.

In this embodiment of the present invention, the node device 600 sends first node information to user equipment. Therefore, in this embodiment of the present invention, the user equipment can obtain, by using the first node information, information related to access to a first node. Therefore, when the second node sends, to the user equipment, a fifth message used to page the user equipment to access a network, and the user equipment receives the fifth message and learns that the user equipment needs to access the network, the user equipment not only can choose to access a second node cell corresponding to the node device 600, but also can choose to access the first node.

An embodiment of the present invention further provides user equipment 700. FIG. 7A is a schematic compositional diagram of the user equipment 700 provided in this embodiment of the present invention. As shown in FIG. 7A, the user equipment 700 includes a first receiving unit 701 and a second receiving unit 702.

The first receiving unit 701 is configured to receive a first message sent by a second node, where the first message is used to instruct the user equipment 700 to receive a system message of a first node cell, or used to instruct the user equipment 700 to receive an updated system message of a first node cell.

The second receiving unit 702 is configured to receive the system message of the first node cell or receive the updated system message of the first node cell according to the first message received by the first receiving unit 701.

In a first implementation manner, the first message includes at least one of: a paging configuration parameter of the first node cell, an identifier of a first node, an identifier of the first node cell, a system message indicator of the first node cell, system message content of the first node cell, or updated system message content of the first node cell.

In a second implementation manner, the first message is a configuration message, a paging message, or a system message.

In a third implementation manner, the first message is a paging message, and the paging message includes at least one of the following: an identifier of a first node, an identifier of the first node cell, or a system message indicator of the first node cell.

The second receiving unit 702 is specifically configured to:
receive the system message of the first node cell or the updated system message of the first node cell in the first node cell according to the paging message.

In a fourth implementation manner, the first message is a paging message.

The first receiving unit 701 is further configured to:
before the second receiving unit 702 receives the system message of the first node cell or receives the updated system message of the first node cell according to the first message, receive a fourth message sent by the second node, where the fourth message includes the paging configuration parameter of the first node cell.

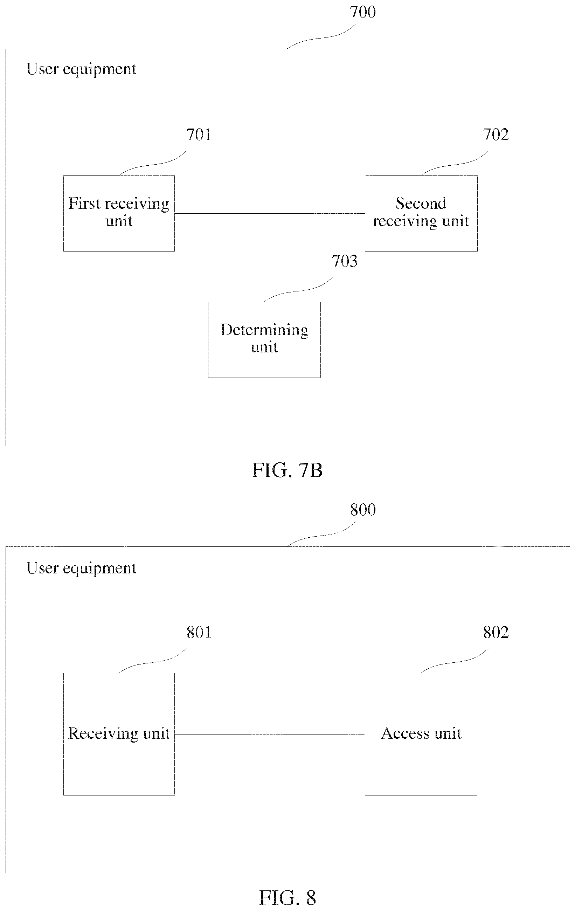

The user equipment 700 further includes a determining unit 703, as shown in FIG. 7B.

The determining unit 703 is configured to determine a paging time according to the paging configuration parameter of the first node cell.

The first receiving unit 701 is further configured to:
receive a paging message in a second node cell within the paging time determined by the determining unit 703, where the paging message is used to indicate that a system message of the first node is updated or used to instruct the user equipment 700 to receive the system message of the first node cell.

In a fifth implementation manner, the first message is a configuration message or a system message, and the configuration message or the system message includes a paging configuration parameter of the first node cell.

The user equipment 700 further includes a determining unit 703, as shown in FIG. 7B.

The determining unit 703 is configured to: before the second receiving unit 702 receives the system message of the first node cell or receives the updated system message of the first node cell according to the first message, determine a paging time according to the paging configuration parameter of the first node cell.

The first receiving unit 701 is further configured to:
receive a paging message in the first node cell within the paging time determined by the determining unit 703, where the paging message is used to indicate that a system message of a first node is updated or used to instruct the user equipment 700 to receive the system message of the first node cell.

In a sixth implementation manner, the second receiving unit 702 is further configured to:
receive an updated system message of the second node cell or a system message of the second node cell in the second node cell according to the first message.

In a seventh implementation manner,
the user equipment 700 camps on the second node cell corresponding to the second node.

In an eighth implementation manner, the user equipment 700 receives a paging message only from the second node cell corresponding to the second node; or
the user equipment 700 receives a paging message in the second node cell corresponding to the second node, and the user equipment 700 receives a paging message in the first node cell.

The paging message that is received by the user equipment 700 in the first node cell includes at least one of the following:
a paging message used to notify a first earthquake and tsunami warning system ETWS related notification and/or a second ETWS related notification; or
a paging message used to announce a commercial mobile alert service CMAS notification.

In a ninth implementation manner, the user equipment 700 receives the system message of the first node cell; and/or the user equipment 700 measures the first node cell.

In this embodiment of the present invention, the user equipment 700 receives a first message sent by a second node, where the first message is used to instruct the user equipment 700 to receive a system message of a first node cell or used to indicate that a system message of a first node cell is updated; the user equipment 700 can receive the system message of the first node cell or an updated system message of the first node cell according to the received first message sent by the second node. In this way, the user equipment can camp on a second node cell corresponding to the node device and be paged by the second node, and a first node does not need to perform paging, thereby reducing an air interface resource.

An embodiment of the present invention further provides user equipment 800. FIG. 8 is a schematic compositional diagram of the user equipment 800 provided in this embodiment of the present invention. As shown in FIG. 8, the user equipment 800 includes a receiving unit 801 and an access unit 802.

The receiving unit 801 is configured to receive a fifth message sent by a second node and first node information, where the fifth message is used to page the user equipment 800, or used to instruct the user equipment 800 to access a network, or used to instruct the user equipment 800 to establish a radio resource control RRC connection, and the first node information is used to provide information about a first node to the user equipment 800.

The access unit 802 is configured to access the first node according to the first node information and the fifth message received by the receiving unit 801.

In a first implementation manner, the first node information includes at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

In a second implementation manner, the first node information includes an identifier of a first node cell or an identifier of the first node, and the first node information is included in a second message.

In a third implementation manner, the access unit 802 is specifically configured to access the first node according to the fifth message and the first node information in the following manner:
determining the first node cell according to the identifier of the first node or the identifier of the first node cell that is included in the fifth message;
listening to a system message of the first node cell in the first node cell;
obtaining an access configuration of the first node according to the received system message of the first node cell; and
accessing the first node according to the obtained access configuration of the first node.

In a fourth implementation manner, the first node information includes the access configuration of the first node, and the access configuration of the first node is included in the second message.

In a fifth implementation manner, the access unit 802 is specifically configured to access the first node according to the fifth message and the first node information in the following manner:
determining, according to the fifth message, that the user equipment 800 is paged, or is paged to access a network, or is paged to establish an RRC connection; and
accessing the first node according to the access configuration of the first node included in the second message.

In a sixth implementation manner, the access unit 802 is specifically configured to access the first node according to the fifth message and the first node information in the following manner:
determining, according to the identifier of the first node cell or the identifier of the first node that is included in the fifth message, that a node that the user equipment 800 needs to access is the first node corresponding to the identifier of the first node cell or the identifier of the first node; and
accessing the first node according to the access configuration of the first node included in the second message.

In a seventh implementation manner, the access unit 802 is specifically configured to access the first node according to the fifth message and the first node information in the following manner:
determining, according to the fifth message, that the user equipment 800 is paged, or is paged to access a network, or is paged to establish an RRC connection;
receiving the second message, where the second message includes the access configuration of the first node; and
accessing the first node according to the access configuration of the first node included in the second message.

In an eighth implementation manner, the second message is the fifth message.

In a ninth implementation manner, the fifth message is a paging message.

In a tenth implementation manner, the second message is sent to the user equipment 800 by the first node, the second node, or a third node.

In an eleventh implementation manner, the user equipment 800 camps on a second node cell corresponding to the second node.

In a twelfth implementation manner, the user equipment 800 receives a paging message only from the second node cell corresponding to the second node; or
the user equipment 800 receives a paging message in the second node cell corresponding to the second node, and the user equipment 800 receives a paging message in the first node cell.

The paging message that is received by the user equipment 800 in the first node cell includes at least one of the following:
a paging message used to notify a first earthquake and tsunami warning system ETWS related notification and/or a second ETWS related notification; or
a paging message used to announce a commercial mobile alert service CMAS notification.

In a thirteenth implementation manner, the user equipment 800 receives the system message of the first node cell; and/or the user equipment 800 measures the first node cell.

In this embodiment of the present invention, the user equipment 800 receives first node information sent by a second node. Therefore, in this embodiment of the present invention, the user equipment 800 can obtain, by using the first node information, information related to access to a first node. Therefore, when the second node sends, to the user equipment 800, a fifth message used to page the user equipment 800 to access a network, and the user equipment 800 receives the fifth message and learns that the user equipment 800 needs to access the network, the user equipment 800 not only can choose to access a second node cell corresponding to the node device 200, but also can choose to access the first node.

The message processing method provided in the embodiments of the present invention is described in detail below in embodiments of the present invention.

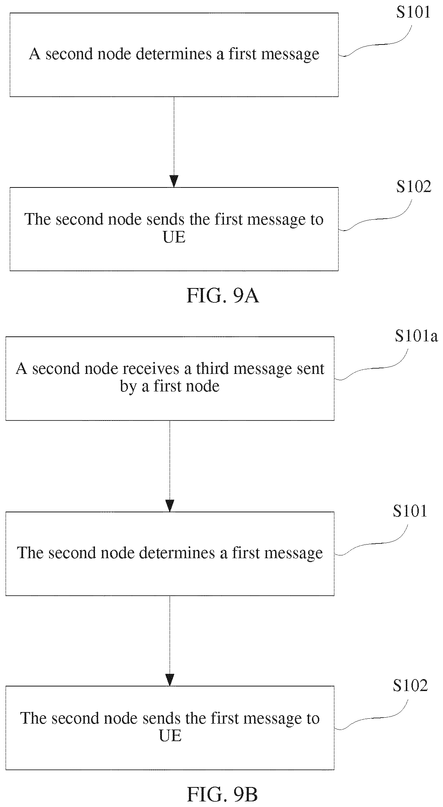

FIG. 9A is a flowchart of a message processing method according to an embodiment of the present invention. The method is executed by a second node. As shown in FIG. 9A, the method includes the following steps.

S101. The second node determines a first message.

In this embodiment of the present invention, the first message determined by the second node is used to instruct UE to receive a system message of a first node cell or used to indicate that a system message of a first node cell is updated.

For S101, specifically, the first message is further used to: instruct the UE to receive the system message of the first node cell and a system message of a second node cell; or instruct the UE to receive an updated system message of the first node cell and an updated system message of a second node cell.

Specifically, the first message may be a paging message, or may be an RRC message, or may be a system message, or may be an indication message at a MAC layer or signaling at a physical layer, or the like. A type of the message is not limited in the present invention.

S102. The second node sends the first message to UE.

In this embodiment of the present invention, the second node sends the first message to the UE, and the UE receives the system message of the first node cell or receives the updated system message of the first node cell according to the received first message, so that the UE residing on the second node receives a paging message on the second node, and the UE can perform system message listening and cell measurement for a first node having good signal quality, and when needing to access a network, accesses the first node having good signal quality at first time, without a need for a first node to provide a paging message for the UE to instruct the UE to receive the system message of the first node cell or to notify that the system message of the first node cell is updated, thereby reducing an air interface resource.

Specifically, the first message may be a paging message, or may be an RRC message, or may be a system message, or may be an indication message at a MAC layer or signaling at a physical layer, or the like. A type of the message is not limited in the present invention.

For S102, specifically, the first message is further used to: instruct the UE to receive the system message of the first node cell and the system message of the second node cell; or instruct the UE to receive the updated system message of the first node cell and the updated system message of the second node cell.

Thereby, the UE receives the system message of the first node cell and the system message of the second node cell according to the received first message; or the UE receives the updated system message of the first node cell and the updated system message of the second node cell according to the received first message.

In this embodiment of the present invention, the first message sent to the UE by the second node includes at least one of: a paging configuration parameter of the first node cell, an identifier of the first node cell, a system message indicator of the first node cell, system message content of the first node cell, or updated system message content of the first node cell.

Optionally, in this embodiment of the present invention, if the system message of the first node cell is updated, or when the UE needs to receive the system message of the first node cell, the first node may send a third message to the second node, and by using the third message, indicate that the system message of the first node cell is updated, or instruct the UE to receive the system message of the first node cell. That is, in this embodiment of the present invention, before determining the first message by the second node, the method may include the following steps, as shown in FIG. 9B.

S101a. The second node receives a third message sent by a first node.

In this embodiment of the present invention, the third message that is sent by the first node and that is received by the second node may include at least one of the following: the paging configuration parameter of the first node cell, the identifier of the first node cell, the system message indicator of the first node cell, the system message content of the first node cell, or the updated system message content of the first node cell.

It should be noted that, in this embodiment of the present invention, it is only a preferred implementation manner that the second node receives the third message sent by the first node, and the paging configuration parameter of the first node cell, the identifier of the first node cell, the system message indicator of the first node cell, the system message content of the first node cell, or the updated system message content of the first node cell that is included in the third message is used to indicate that the system message of the first node cell is updated or instruct the UE to receive the system message of the first node cell. This is not limited in this embodiment of the present invention. This step may be an optional step.

Manners in which the foregoing embodiment may be implemented are described below in combination with practical application as examples in this embodiment of the present invention.

### Implementation manner 1:

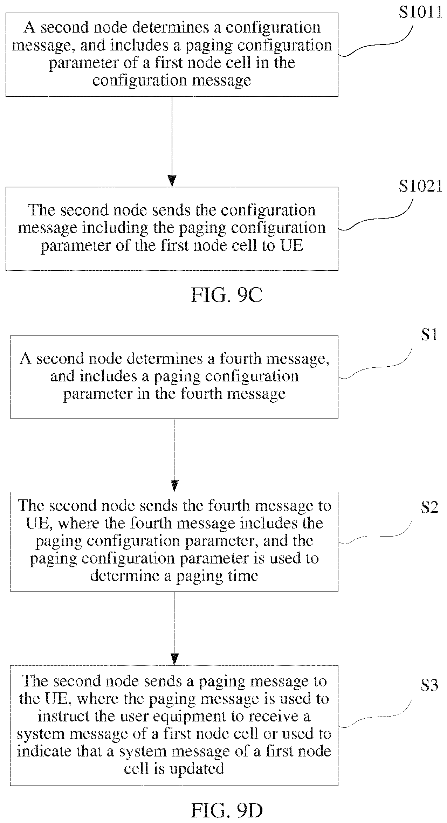

The first message is a configuration message, where the configuration message includes the paging configuration parameter of the first node cell. An implementation flowchart is shown in FIG. 9C.

S1011. A second node determines a configuration message, and includes a paging configuration parameter of a first node cell in the configuration message.

In this embodiment of the present invention, the paging configuration parameter of the first node cell may be at least one of the following parameters: T (defaultPagingCycle, it is a DRX cycle of UE, that is, the DRX cycle of the UE), nb (Parameter: nB is used as one of parameters to derive a paging frame and a paging occasion according to TS 36.304. For example, a value range of nB may be: 4T, 2T, T, T/2, T/4, T/8, T/16, or T/32), a paging radio network temporary identifier (paging Radio Network Tempory Identity, P-RNTI), a paging cycle (defaultPagingCycle), an identifier of UE, or an identifier of the first node cell. How the second node obtains and determines the paging configuration parameter of the first node cell is not limited in this embodiment of the present invention. For example, the second node may configure the paging configuration parameter of the first node cell on its own and provide the paging configuration parameter to the UE. Certainly, the second node may also obtain, through interaction with a first node, the paging configuration parameter provided by the first node.

Certainly, the paging configuration parameter may also be another parameter. This is not limited in the present invention.

S1021. The second node sends the configuration message to UE, where the configuration message includes the paging configuration parameter of the first node cell.

In this embodiment of the present invention, the paging configuration parameter of the first node cell is used by the UE to determine a paging time for receiving a paging message sent by the first node, where the paging message is used to notify the UE that a system message of the first node is updated or instruct the UE to receive a system message of a micro cell.

The paging configuration parameter of the first node cell is used to determine a paging time. The paging configuration parameter is used by the UE to determine a paging time for receiving a paging message sent by the first node, where the paging message is used to instruct the user equipment to receive a system message of the first node cell or used to indicate that a system message of the first node cell is updated.

Specifically, that the paging configuration parameter is used to determine a paging time may be one of the following possibilities: The paging configuration parameter is used by the UE to determine a paging time for receiving a paging message, used to determine a time for receiving a paging message, or used to determine a time for sending a paging message. Specifically, the paging time may be at least one of the following parameters: a paging cycle (Paging Cycle, for example, a default Paging Cycle), a paging frame (Paging Frame), or a paging occasion (paging occasion).

The paging cycle (Paging cycle) may indicate a cycle of a paging message.

The paging occasion may be a subframe in a paging frame in which a paging message is located.

The paging frame may be a radio frame (radio frame) of a paging message.

For the paging parameter, the paging configuration parameter may be specifically at least one of the following parameters: T (defaultPagingCycle, it is the DRX cycle of the UE, that is, the DRX cycle of the UE), nb (Parameter: nB is used as one of parameters to derive a paging frame and a paging occasion according to TS 36.304. For example, a value range of nB may be: 4T, 2T, T, T/2, T/4, T/8, T/16, or T/32), a paging radio network temporary identifier (paging Radio Network Tempory Identity, P-RNTI), a paging cycle (defaultPagingCycle), the identifier of the UE, the identifier of the first node cell, an identifier of the first node, or a paging record (PagingRecord).

Specifically, for example, the foregoing configuration message may also be a system message.

Another possibility of implementation manner 1: The first message is a paging message, and before sending the paging message to the user equipment by the second node, the method further includes:
sending, by the second node, a fourth message to the user equipment, where the fourth message includes a paging configuration parameter, and the paging configuration parameter is used to determine a paging time. An implementation flowchart is shown in FIG. 9D.

S1. A second node determines a fourth message, and includes a paging configuration parameter in the fourth message.

In this embodiment of the present invention, the paging configuration parameter included in the fourth message is used by UE to determine a paging time for receiving a paging message sent by the second node, where the paging message is used to notify the UE that a system message of a first node is updated or instruct the UE to receive a system message of a micro cell.

Specifically, that the paging configuration parameter is used to determine a paging time may be one of the following possibilities: The paging configuration parameter is used by the UE to determine a paging time for receiving a paging message sent by the second node, used to determine a time for receiving a paging message, or used to determine a time for sending a paging message.

The paging configuration parameter may be at least one of the following parameters: T (defaultPagingCycle, it is a DRX cycle of the UE, that is, the DRX cycle of the UE), nb (Parameter: nB is used as one of parameters to derive a paging frame and a paging occasion according to TS 36.304. For example, a value range of nB may be: 4T, 2T, T, T/2, T/4, T/8, T/16, or T/32), a paging radio network temporary identifier (paging Radio Network Tempory Identity, P-RNTI), a paging cycle (defaultPagingCycle), an identifier of the UE, an identifier of a first node cell, an identifier of the first node, or a paging record (PagingRecord).

S2. The second node sends the fourth message to UE, where the fourth message includes the paging configuration parameter, and the paging configuration parameter is used to determine a paging time.

Specifically, that the paging configuration parameter is used to determine a paging time may be one of the following possibilities: The paging configuration parameter is used by the UE to determine a paging time for receiving a paging message of the second node, used to determine a time for receiving a paging message, or used to determine a time for sending a paging message. The paging message is used to instruct the user equipment to receive a system message of the first node cell or used to indicate that a system message of the first node cell is updated.

Specifically, the paging time may be at least one of the following parameters: a paging cycle (Paging Cycle, for example, a default Paging Cycle), a paging frame (Paging Frame), or a paging occasion (paging occasion).

The paging cycle (Paging cycle) indicates a cycle for sending a paging message.

The paging occasion refers to a subframe in a paging frame for sending a paging message.

The paging frame refers to a radio frame (radio frame) for sending a paging message.

The paging parameter may be specifically as follows.

S3. The second node sends a paging message to the UE, where the paging message is used to instruct the user equipment to receive a system message of a first node cell or used to indicate that a system message of a first node cell is updated.

Specifically, for example, the fourth message sent by the second node may be a radio resource control (Radio Resource Control, RRC) connection reconfiguration message (RRC Connection Reconfiguration message).

In this embodiment of the present invention, the second node sends the paging configuration parameter of the first node cell to the UE, so that the UE can determine a paging time according to the paging configuration parameter of the first node cell. That the paging configuration parameter is used to determine a paging time may be one of the following possibilities: The paging configuration parameter is used by the UE to determine a paging time for receiving a paging message, used by the UE to determine a paging time for receiving a paging message sent by the second node, used to determine a time for receiving a paging message, used to determine a time for sending a paging message, or used to determine a time for sending a paging message by the node. Specifically, the paging time may be at least one of the following parameters: a paging cycle (Paging Cycle, for example, a default Paging Cycle), a paging frame (Paging Frame), or a paging occasion (paging occasion).

The paging cycle (Paging cycle) indicates a cycle for sending a paging message.

The paging occasion refers to a subframe in a paging frame for sending a paging message.

The paging frame refers to a radio frame (radio frame) for sending a paging message.

For example, the UE receives a paging message within a paging cycle of 32 frames. For example, the UE obtains, through calculation, a paging frame and a paging subframe by using the paging configuration parameter, and the UE receives a paging message within the calculated Y^{th} subframe of the X^{th} frame. A specific calculation formula of the paging frame and the subframe is not limited in the present invention. A previously used technology may be adopted, or another new algorithm may be used. For another example, the UE receives a paging message within the Y^{th} subframe of the X^{th} paging frame within a paging cycle of 64 frames.

As described above, the paging time may be any one of the following possibilities: a paging time for receiving a paging message by the UE, a paging time that is for receiving a paging message sent by the second node and that is determined by the UE, a time for receiving a paging message, a time for sending a paging message, or a time for sending a paging message by the node.

Within the paging time, a paging message is received in the second node cell, where the paging message is used to instruct the UE to receive the system message of the first node cell or used to notify the UE that the system message of the first node cell is updated. Thereby, within the paging time, if the UE receives the paging message in the second node cell, after receiving the paging message, the UE receives the system message of the first node cell or receives the updated system message of the first node cell.

In this embodiment of the present invention, in addition to determining a fourth message (for example, a message A1) related to a second node cell, a second node may further determine another set of fourth messages (for example, a message A12) including a paging configuration parameter of a first node cell, so that UE corresponds to two sets of paging times in the second node cell, and the UE can receive, within a first paging time corresponding to the first fourth message (for example, the message A1), a paging message related to the second node cell, and receive, within a second paging time corresponding to the second fourth message (for example, the message A2), a paging message related to the first node cell in the second node cell. For this manner, the second node only needs to additionally configure a set of paging configuration parameters, bringing a relatively simple implementation manner.

### Implementation manner 2:

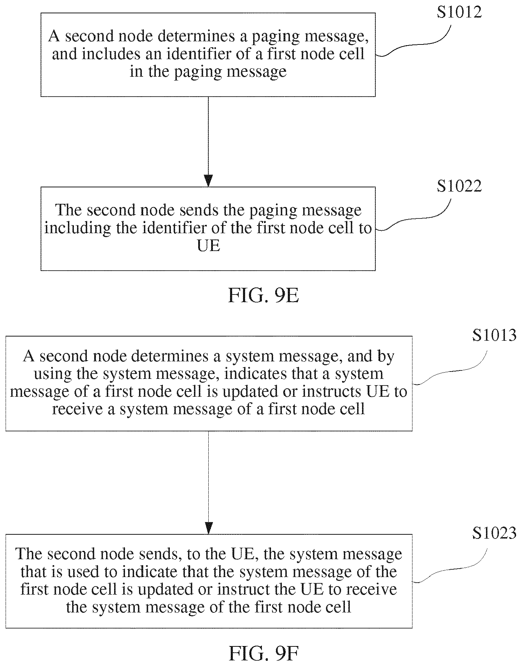

The first message is a paging message. Optionally, the paging message includes the identifier of the first node cell. An implementation flowchart is shown in FIG. 9E.

S1012. A second node determines a paging message. Optionally, the second node includes, in the paging message, at least one of the following: an identifier of a first node cell, an identifier of a first node, a system message indicator of a first node cell.

For example, in this embodiment of the present invention, the second node may determine the paging message, include the identifier of the first node cell in the paging message, and by using the paging message including the identifier of the first node cell, notify UE that a system message of the first node cell is updated or instruct the UE to receive a system message of the first node cell.

In this embodiment of the present invention, the identifier of the first node cell may be a physical cell identifier (Physical Cell ID, PCI), a cell global identifier (E-UTRAN Cell Global Identifier, ECGI), or the like. Specifically, for example, in this embodiment of the present invention, the second node may obtain the identifier of the first node cell by using a message sent by the first node; and/or
specifically, the paging message may include the identifier of the first node, and by using the paging message including the identifier of the first node, the UE is notified that the system message of the first node cell is updated or the UE is instructed to receive the system message of the first node cell; and/or
specifically, the paging message may include the system message indicator of the first node cell, and by using the paging message including the system message indicator of the first node cell, the UE is notified that the system message of the first node cell is updated or the UE is instructed to receive the system message of the first node cell.

S1022. The second node sends the paging message to UE. The paging message is used to notify the UE that the system message of the first node/the first node cell (for example, a cell A) is updated, or instruct the UE to receive the system message of the first node/the first node cell (for example, the cell A). Optionally, the paging message includes the identifier of the first node cell.

Specifically, for example, the paging message includes:
1) systemInfoModification, or systemInfoModification ENUMERATED {true}, or eab-ParamModification, or eab-ParamModification ENUMERATED {true}, to indicate that the system message is updated; and/or
the paging message may include:
2) information related to the first node cell, for example, including at least one of the following: the identifier of the first node cell, the identifier of the first node, or the system message indicator of the first node cell. Certainly, the paging message may also include another parameter. This is not limited in the present invention.

Thereby, the paging message is used to notify the UE that the system message of the first node/the first node cell (for example, the cell A) is updated, or instruct the UE to receive the system message of the first node/the first node cell (for example, the cell A).

Optionally, the paging message includes an identifier, for example, an S-temporary mobile subscriber identity (S-Temporary Mobile Subscriber Identity, S-TMSI) or an international mobile subscriber identity (International Mobile Subscriber Identity, IMSI), of the UE.

In this embodiment of the present invention, a second node sends a paging message to UE, so that after receiving the paging message sent by the second node, the UE can learn, according to information (for example, a cell identifier of a first node or an identifier of the first node) related to the first node that is included in the paging message sent by the second node, that a system message of a first node cell is updated, and then the UE can receive an updated system message of the first node cell in the first node cell corresponding to the cell identifier of the first node; or the UE learns that the UE needs to receive a system message of a first node cell, and then the UE can receive the system message of the first node cell in the first node cell corresponding to the cell identifier of the first node.

### Implementation manner 3:

The first message is a system message, and the system message is used to indicate that the system message of the first node cell is updated or used to instruct the user equipment to receive the system message of the first node cell. An implementation flowchart is shown in FIG. 9F.

S1013. A second node determines a system message, and by using the system message, indicates that a system message of a first node cell is updated or instructs UE to receive a system message of a first node cell.

S1023. The second node sends the system message to the UE, where the system message is used to indicate that the system message of the first node cell is updated or instruct the UE to receive the system message of the first node cell.

Specifically, the second node sends the system message to the UE, where the system message includes indication information, to indicate that the system message of the first node cell is updated or instruct the UE to receive the system message of the first node cell. The indication information may have multiple forms, for example, may be a cell identifier of the first node cell, and/or an identifier of a first node, and/or a system message indicator (indicator) of the first node cell, to indicate that the system message of the first node cell is updated or instruct the UE to receive the system message of the first node cell.

In this embodiment of the present invention, a second node sends a system message to UE, to indicate that a system message of a first node cell is updated or instruct the UE to receive a system message of a first node cell. Therefore, after receiving the system message sent by the second node, the UE can receive an updated system message of the first node cell in the first node cell, or receive the system message of the first node cell in the first node cell.

### Implementation manner 4:

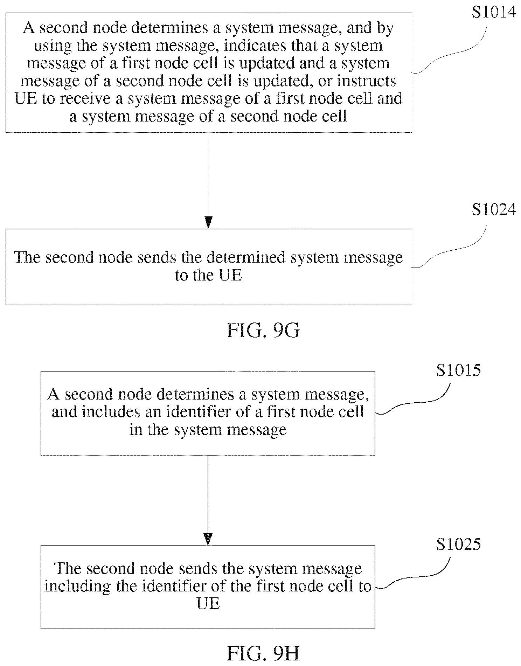

The first message is a system message, and the system message is used to indicate that the system message of the first node cell is updated and the system message of the second node cell is updated, or used to instruct the UE to receive the system message of the first node cell and the system message of the second node cell. An implementation flowchart is shown in FIG. 9G.

S1014. A second node determines a system message, and by using the system message, indicates that a system message of a first node cell is updated and a system message of a second node cell is updated, or instructs UE to receive a system message of a first node cell and a system message of a second node cell.

S1024. The second node sends the system message to the UE.

In this embodiment of the present invention, a second node sends a system message to UE, to indicate that a system message of a first node cell is updated and a system message of a second node cell is updated, or to instruct the UE to receive a system message of a first node cell and a system message of a second node cell. Therefore, after receiving the system message sent by the second node, the UE can receive a system message or an updated system message in the first node cell and the second node cell, and then can receive the system message of the first node cell or an updated system message of the first node cell in the first node cell.

Optionally, in implementation manner 3 and implementation manner 4 in the present invention, indication information (for example, the system message indicator of the first node cell) included in the system message may be used to indicate that the system message of the first node cell is updated or instruct the UE to receive the system message of the first node cell. In this embodiment of the present invention, the first message is a system message, the system message includes the identifier of the first node cell, and the identifier of the first node cell is used to indicate that the system message of the first node cell is updated or instruct the UE to receive the system message of the first node cell. An implementation flowchart is shown in FIG. 9H.

S1015. A second node determines a system message. Optionally, the system message includes at least one of the following: an identifier of a first node cell, an identifier of a first node, or a system message indicator of a first node cell. The system message may also include another indicator or identifier.

Specifically, in this embodiment of the present invention, the system message determined by the second node includes at least one of the following: the identifier of the first node cell, the identifier of the first node, or the system message indicator of the first node cell. By using the system message including the information, it is indicated that the system message of the first node cell is updated or the UE is instructed to receive the system message of the first node cell.

In this embodiment of the present invention, the identifier of the first node cell may be a PCI, an ECGI, or the like. For example, in this embodiment of the present invention, the second node may obtain the identifier of the first node cell by using a message sent by the first node.

S1025. The second node sends the system message to UE. Optionally, the system message includes at least one of the following: a paging configuration, the identifier of the first node cell, the identifier of the first node, or the system message indicator of the first node cell.

Specifically, using an example in which the identifier of the first node cell is included, in this embodiment of the present invention, the second node sends the system message including the identifier of the first node cell to the UE, so that after receiving the system message sent by the second node, the UE can learn, according to the identifier of the first node cell included in the system message sent by the second node, that the system message of the first node cell is updated, and then the UE can receive an updated system message of the first node cell in the first node cell corresponding to the identifier of the first node cell; or receive the system message of the first node cell in the first node cell corresponding to the identifier of the first node cell.

### Implementation manner 5:

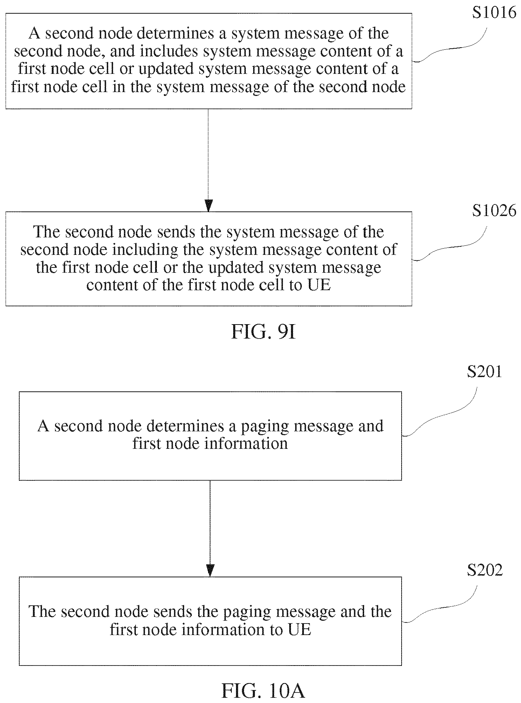

The first message is a system message of the second node, and the system message of the second node includes the system message content of the first node cell or the updated system message content of the first node cell. An implementation flowchart is shown in FIG. 9I.

S1016. A second node determines a system message of the second node, and includes system message content of a first node cell or updated system message content of a first node cell in the system message of the second node.

S1026. The second node sends the system message of the second node including the system message content of the first node cell or the updated system message content of the first node cell to UE.

Specifically, for example, in this embodiment of the present invention, a first node may send the system message content of the first node cell or the updated system message content of the first node cell to the second node. The second node includes the system message content of the first node cell or the updated system message content of the first node cell in the determined system message of the second node, and sends the system message of the second node to the UE, so that the UE can directly obtain a system message of the first node cell or an updated system message of the first node cell by using the system message of the second node cell.

By means of the message processing method described above in this embodiment of the present invention, a second node such as a macro base station may, by using a paging message, a configuration message, or a system message, indicate that a system message of a first node cell, for example, a micro cell, is updated, or instruct UE to receive a system message of a first node cell, so that the UE can obtain the system message of the first node cell or an updated system message of the first node cell. Therefore, when a communications service needs to page the UE (for example, the second node sends a paging message to page the UE), the UE can initiate a random access in the first node cell according to the system message of the first node cell or the updated system message of the first node cell that is obtained.

In this embodiment of the present invention, the "paging the user equipment" indicates that a network pages the UE, or pages the UE to access the network, or pages the UE to establish an RRC connection, or instructs the UE to access the network, or instructs the UE to establish an RRC connection.

A scenario in which the message processing method provided in this embodiment of the present invention is specifically used may be as follows.

A macro base station provides wide coverage, and a micro base station has small coverage but good signal quality, and provides offload and/or hotspot support for the macro base station. In this case, when UE resides on the macro base station (for example, a second node), and the macro base station sends a paging message to page the UE to access a network, the UE can access a micro base station (or a micro base station cell) having good signal quality for communication, thereby reducing a burden of the macro base station, and obtaining a high quality communications service. In this scenario, the macro base station sends a paging message. To reduce network signaling load, the micro base station may not send a paging message (for example, the paging message is used to notify the UE that a system message is updated, and/or the paging message is used to page the UE, or used to page the UE to access a network, or used to page the UE to establish an RRC connection), or the UE does not receive a paging message sent by the micro base station (for example, the paging message is used to notify the UE that a system message is updated, and/or the paging message is used to page the UE to access a network). Because the UE is notified of a system message update of the micro base station by using a paging message, and the micro base station does not send a paging message or the UE does not receive the paging message of the micro base station, the UE cannot obtain the system message update of the micro base station in a timely manner.

When the UE camps on an appropriate cell, the UE further performs cell measurement, including measuring the current cell, measuring an intra-frequency cell, measuring an inter-frequency cell, or the like, to evaluate whether cell reselection needs to be performed, so that the UE can initiate a random access in the residing cell when there is a service need.

Certainly, the present invention is not limited to being applied to only the foregoing scenario.

This embodiment of the present invention provides a manner, so that in a heterogeneous network, UE camps on a second node cell, and receives a system message and a paging message sent by a second node. In addition, the UE can also receive a system message of a first node cell and perform cell measurement, but does not receive a paging message sent by a first node. In this case, after receiving a paging message used to page the UE, the UE can rapidly access the first node.

FIG. 10A is a flowchart of another message processing method according to an embodiment of the present invention. The method shown in FIG. 10A is executed by a second node, and the second node may be, for example, a macro base station. As shown in FIG. 10A, the method includes the following steps.

S201. The second node determines a fifth message and first node information.

In this embodiment of the present invention, the fifth message determined by the second node is used to page UE, or used to page UE to access a network, or used to page UE to establish an RRC connection, or used to instruct UE to access a network, or used to instruct UE to establish an RRC connection. The first node information is used to provide information about a first node to the UE.

In this embodiment of the present invention, the first node information may include at least one of: an identifier of a first node cell, an access configuration of a first node cell, an RRC configuration of the first node, a Packet Data Convergence Protocol (Packet Data Convergence Protocol, PDCP) configuration of the first node, a Radio Link Control layer protocol (Radio Link Control, RLC) configuration of the first node, a Media Access Control (Media Access Control, MAC) configuration of the first node, a physical layer configuration of the first node, or an access configuration of the first node.

In this embodiment of the present invention, the second node unnecessarily simultaneously determines the fifth message and the first node information, but may determine the fifth message and the first node information one after another. For example, the fifth message may be sent first and then the first node information is sent, or the first node information may be sent first and then the fifth message is sent, or the first node information may be determined when the fifth message is determined. This is not specifically limited in this embodiment of the present invention.

It should be noted that, the first node information may be included in the fifth message and sent, or the first node information may be sent in another message other than the fifth message. This is not limited in the present invention.

Specifically, the access configuration of the first node may be PRACH-Config, and the access configuration of the first node may specifically include at least one of the following: prach-ConfigIndex, highSpeedFlag, zeroCorrelationZoneConfig, prach-FreqOffset, or rootSequenceIndex. Certainly, in the present invention, parameter content is not limited to the foregoing parameter content given as an example.

For example, for specific definitions of the parameters, refer to the following table.

| |
|---|
| PRACH-Config field descriptions: Configuration description |
| highSpeedFlag: High speed flag |
| Parameter: High-speed-flag, see TS 36.211, [21, 5.7.2]. TRUE corresponds to Restricted set and FALSE to Unrestricted set. |
| prach-ConfigIndex: Access configuration index |
| Parameter: prach-ConfigurationIndex, see TS 36.211 [21, 5.7.1]. |
| prach-FreqOffset: Access frequency offset |
| Parameter: prach-FrequencyOffset, see TS 36.211, [21, 5.7.1]. For TDD the value range is dependent on the value of prach-ConfigIndex. |
| rootSequenceIndex |
| Parameter: RACH_ROOT_SEQUENCE, see TS 36.211 [21, 5.7.1]. |
| zeroCorrelationZoneConfig: Zero correlation zone configuration |
| Parameter: NCS configuration, see TS 36.211, [21, 5.7.2: table 5.7.2-2] for preamble format 0..3 and TS 36.211, [21, 5.7.2: table 5.7.2-3] for preamble format 4. |

Specifically, a value range of prach-ConfigIndex may be INTEGER (0..63), a value of highSpeedFlag may be BOOLEAN (for example, true or false), a value range of zeroCorrelationZoneConfig may be INTEGER (0..15), a value range of prach-FreqOffset may be INTEGER (0..94), and a value range of rootSequenceIndex is INTEGER (0..837).

The specific description about the foregoing access configuration is applicable to all embodiments related to access configuration in the present invention, and therefore is not repeatedly described.

It should be noted that, in the present invention, the "paging the UE" indicates that a network pages the UE, or instructs the UE to access a network, or instructs the UE to establish an RRC connection, or pages the UE to access a network, or pages the UE to establish an RRC connection.

S202. The second node sends the first node information and sends the fifth message to UE.

It should be noted that, in this embodiment of the present invention, the second node unnecessarily simultaneously sends the fifth message and the first node information to the UE, but may send the fifth message and the first node information to the UE one after another. For example, the fifth message may be sent first and then the first node information is sent, or the first node information may be sent first and then the fifth message is sent, or the first node information may be included when the fifth message is sent. This is not specifically limited in this embodiment of the present invention.

Specifically, a first manner of performing S201 is a separate sending manner:
A. The second node determines the fifth message, where the fifth message is used to page the user equipment, or used to instruct the user equipment to access a network, or used to instruct the user equipment to establish a radio resource control RRC connection.
B. The second node sends the fifth message to the user equipment;
   the second node determines the first node information, where the first node information is used to provide the information about the first node to the user equipment; and
   the second node sends the first node information to the user equipment.

A and B are two separately performed steps. An order in which A and B are performed is not limited. For example, B may be performed first and then A is performed, or the two steps may be simultaneously performed.

Correspondingly, in S202, the second node separately sends the fifth message and the first node information. Thereby, the UE separately receives the fifth message and the first node information.

Specifically, a second manner of performing S201 is a joint sending manner:

The second node determines the fifth message and the first node information. Specifically, the first node information is entirely included in the fifth message. The first node information may be at least one of the following: the identifier of the first node cell, an identifier of the first node, or the access configuration of the first node.

Correspondingly, in S202, the second node sends the fifth message and the first node information jointly. Thereby, when the UE receives the fifth message, the UE obtains the first node information at the same time.

In this embodiment of the present invention, a second node sends first node information to user equipment. Therefore, in this embodiment of the present invention, the UE can obtain, by using the first node information, information related to access to a first node. Therefore, when the second node sends, to the UE, a fifth message used to page the UE to access a network, and the UE receives the fifth message and learns that the UE needs to access the network, the UE not only can choose to access the second node, but also can choose to access the first node. The first node information may be included in the fifth message, or may not be included in the fifth message. This is not limited in the present invention. The first node information may be a cell identifier of the first node, an identifier of the first node, an access configuration of the first node or a first node cell, or the like. The first node information is described below by using examples in this embodiment of the present invention, but is not merely limited to the content in this embodiment of the present invention.

In this embodiment of the present invention, the fifth message may be a paging message. An example in which the fifth message is a paging message is used below for description in this embodiment of the present invention. Certainly, the fifth message may also be another type of message, for example, various possible signaling such as an RRC message, a MAC message, or a physical layer message. This is not limited herein in the present invention.

An implementable manner in which the UE accesses the first node by using a paging message and the first node information sent by the first node is emphatically described below in this embodiment of the present invention.

### Implementation manner 1:

The first node information includes the identifier of the first node cell, and the identifier of the first node cell is included in a second message.

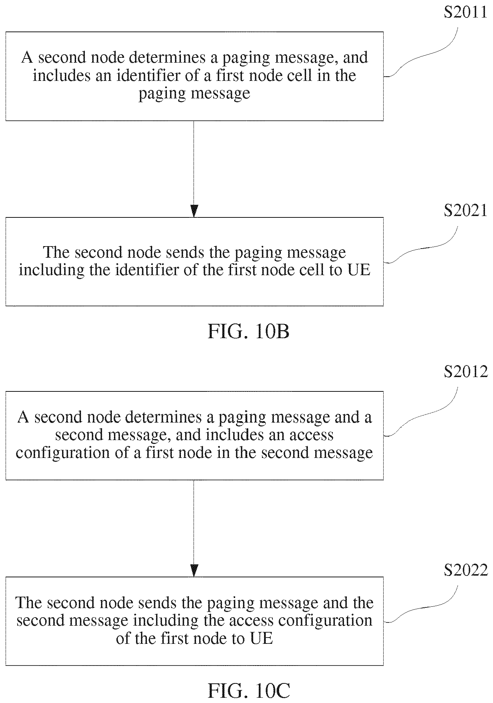

Optionally, in this embodiment of the present invention, the second message may be the fifth message. That is, the second message may be a paging message. An example in which the second message is a paging message used by the second node to page the UE to access a network is used below for description in this embodiment of the present invention. An implementation process is shown in FIG. 10B.

S2011. A second node determines a paging message, and includes an identifier of a first node cell in the paging message. The paging message is used to page UE (that is, to send paging information to UE in an idle state to transmit paging information to a UE in RRC_IDLE). The paging information is provided by an upper layer, and thereby the UE may trigger an RRC connection establishment procedure. For example, the paging message is used to notify that the UE receives a call (The paging information is provided to upper layers, which in response may initiate RRC connection establishment, e.g. to receive an incoming call). In this embodiment of the present invention, the identifier of the first node cell may be, for example, a PCI or an ECGI.

For the paging message, the paging message may be used to page the UE (for example, page UE in an idle state, or send paging information to UE in an idle state). The paging message may also have another purpose, for example, a paging message used to notify that a system message is updated; a paging message used to notify a first earthquake and tsunami warning system ETWS related notification and/or a second ETWS related notification; or a paging message used to announce a commercial mobile alert service CMAS notification.

In the current implementation manner 1, the paging message mentioned herein is only used to page the UE, or used to page the UE to access a network, or used to page the UE to establish an RRC connection.

S2021. The second node sends the paging message including the identifier of the first node cell to UE.

The paging message is used to page the UE (that is, to send paging information to UE in an idle state. to transmit paging information to a UE in RRC_IDLE). The paging information is provided by an upper layer, and thereby the UE may trigger an RRC connection establishment procedure. For example, the paging message is used to notify that the UE receives a call (The paging information is provided to upper layers, which in response may initiate RRC connection establishment, e.g. to receive an incoming call.).

Therefore, in this embodiment of the present invention, the paging message is used to page the UE, or used to page the UE to access a network, or used to page the UE to establish an RRC connection. Thereby, after the UE receives the paging message, the UE accesses the first node cell.

It should be noted that, in many embodiments of the present invention, an example in which a paging message is used to "page the UE to access a network" is used. Specifically, the "page the UE to access a network" may also be paging the UE, or paging the UE to establish an RRC connection, or instructing the UE to access a network, or instructing the UE to establish an RRC connection. This is not enumerated in the present invention.

Specifically, for example, the paging message includes:
1) systemInfoModification, or systemInfoModification ENUMERATED {true}, or eab-ParamModification, or eab-ParamModification ENUMERATED {true}; and/or
the paging message may include:
2) information related to the first node cell, for example, the cell identifier of the first node cell, or an identifier of a first node.

Thereby, the paging message is used to notify the UE that a system message of the first node/the first node cell (for example, a cell A) is updated, or instruct the UE to receive a system message update of the first node/the first node cell (for example, the cell A).

Optionally, the paging message includes an identifier, for example, an S-TMSI or an MSI, of the UE.

Specifically, for example, as to how the UE accesses the first node cell, for example, the second node may send the paging message including the identifier of the first node cell to the UE, so that after receiving the paging message sent by the second node, the UE can listen, according to the identifier of the first node cell included in the paging message, to the system message of the first node cell in the first node cell corresponding to the identifier of the first node cell, and obtain an access configuration of the first node according to the received system message of the first node cell, and then access the first node. Certainly, as to how the UE accesses the first node cell after receiving the paging message, there may be another manner. This is not limited in the present invention. For example, it may also be that the UE has obtained an access configuration of the first node cell (specifically, the UE may obtain the access configuration from the second node, or may obtain the access configuration from another node. This is not limited in the present invention.), and thereby the UE accesses the first node according to the access configuration.

### Implementation manner 2:

The first node information includes the access configuration of the first node, and the access configuration of the first node is included in a second message sent to the UE by the second node.

Optionally, in this embodiment of the present invention, the second message may be the fifth message. That is, the second message may be a paging message, or may not be a paging message. An example in which the second message is not a paging message is used below for description in this embodiment of the present invention. An implementation process is shown in FIG. 10C.

S2012. A second node determines a paging message and a second message, and includes an access configuration of a first node in the second message.

In this embodiment of the present invention, the paging message determined by the second node is dedicatedly used to page UE to access a network, and information about the first node is provided for the UE by using the second message, where the information about the first node is the access configuration of the first node.

In this embodiment of the present invention, the second message may be a radio resource control (Radio Resource Control, RRC) connection reconfiguration message, or may be a system message of a second node cell.

S2022. The second node sends the paging message and the second message including the access configuration of the first node to UE.

In this embodiment of the present invention, the second node sends the paging message to the UE, so that after receiving the paging message, the UE determines that the UE is paged to access a network, and therefore the UE can access the first node according to the access configuration of the first node included in the second message.

Specifically, in this embodiment of the present invention, in a process in which the second node determines the paging message and the second message, a time order in which the second node determines the paging message and determines the second message is not limited. The paging message and the second message may be simultaneously determined, or may be determined one after another. For example, the paging message may be determined first and then the second message is determined, or the second message may be determined first and then the paging message is determined.

Similarly, in this embodiment of the present invention, the second node may simultaneously send the paging message and the second message to the UE, or may send the paging message and the second message to the UE one after another. For example, the paging message may be sent first and then the second message is sent, or the second message may be sent first and then the paging message is sent. An order in which the paging message and the second message are sent is not limited herein in the present invention.

Specifically, for example, the second node first determines the second message, and sends the second message to the UE. The UE accesses the first node according to the access configuration of the first node included in the obtained second message. When a network subsequently needs to page the UE to access the network, the second node sends the paging message to the UE, and after receiving the paging message, the UE learns that the UE needs to access the network. The UE accesses, according to the access configuration of the first node included in the previously obtained second message, by accessing the first node, the network for communication.

It should be noted that, in this embodiment of the present invention, for an implementation process in which the second message is a paging message, the second node only needs to determine the paging message, and include the access configuration of the first node in the paging message, without a need of separately determining and sending the second message. Details of a specific implementation process are not described herein again.

### Implementation manner 3:

The first node information includes the identifier of the first node cell and/or the identifier of the first node, and the access configuration of the first node. The paging message sent by the second node includes the identifier of the first node cell and/or the identifier of the first node, and the access configuration of the first node is included in a second message sent to the UE by the second node.

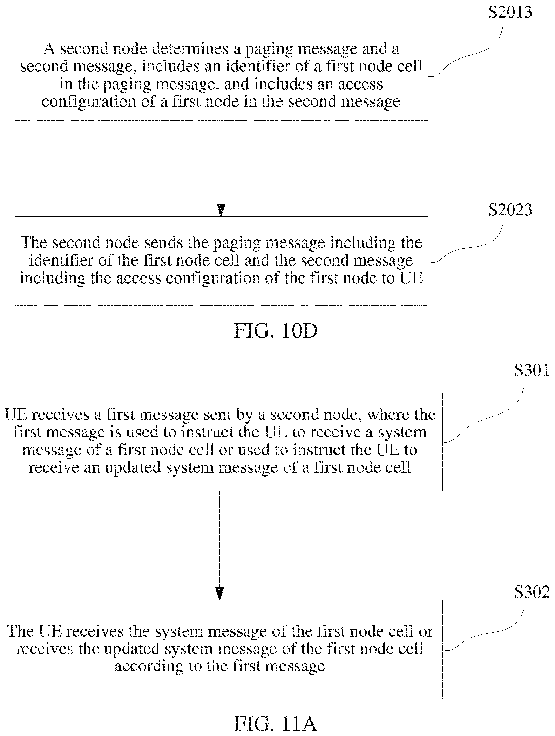

Optionally, in this embodiment of the present invention, the second message may be the fifth message. That is, the second message may be a paging message, or may not be a paging message. An example in which the second message is not a paging message is used below for description in this embodiment of the present invention. An implementation process is shown in FIG. 10D.

S2013. A second node determines a paging message and a second message, includes an identifier of a first node cell in the paging message, and includes an access configuration of a first node in the second message.

In this embodiment of the present invention, the paging message determined by the second node is used to page UE to access a network. In this embodiment of the present invention, the second node further provides the access configuration of the first node for the UE by using the second message.

S2023. The second node sends the paging message including the identifier of the first node cell and the second message including the access configuration of the first node to UE.

Specifically, in this embodiment of the present invention, in a process in which the second node determines the paging message and the second message, a time order in which the second node determines the paging message and determines the second message is not limited. The two messages may be simultaneously determined, or may be determined one after another (for example, the paging message may be determined first, or the second message may be determined first).

Similarly, the paging message and the second message may be simultaneously sent, or may be sent one after another (for example, the paging message is sent first, or for example, the second message is sent first). A time order in which the two messages are sent is not limited herein in the present invention.

Specifically, for example, the second node first determines the second message, and sends the second message to the UE. The UE accesses the first node according to the access configuration of the first node included in the obtained second message. When a network subsequently needs to page the UE to access the network, the second node sends the paging message to the UE, and after receiving the paging message, the UE learns that the UE needs to access the network. The UE accesses, according to the access configuration of the first node included in the previously obtained second message, by accessing the first node, the network for communication.

It should be noted that, in this embodiment of the present invention, for an implementation process in which the second message is a paging message, the second node only needs to determine the paging message, and include the access configuration of the first node in the paging message, without a need of separately determining and sending the second message. Details of a specific implementation process are not described herein again.

In this embodiment of the present invention, a second node sends a paging message including an identifier of a first node cell to UE, so that after receiving the paging message, the UE determines that the UE is paged to access a network, and may determine, according to the identifier of the first node cell included in the paging message, that a node that the UE needs to access is the first node corresponding to the identifier of the first node cell, and access the first node according to an access configuration of the first node included in a second message.

By means of the message processing method provided in this embodiment of the present invention, UE residing on a second node can obtain an access configuration of a first node, and access the first node. Therefore, by means of this embodiment of the present invention, without a need for the UE to receive a paging message sent by the first node or for the first node to sent a paging message, the UE can reside on the second node and be paged by the second node, and the first node does not need to perform paging, thereby reducing an air interface resource.

Based on the message processing method provided in the foregoing embodiments, a message processing method is described below in embodiments of the present invention by using UE as an execution body.

FIG. 11A is a flowchart of a message processing method on a UE side provided in an embodiment of the present invention. As shown in FIG. 11A, the method includes the following steps.

S301. UE receives a first message sent by a second node, where the first message is used to instruct the UE to receive a system message of a first node cell or used to instruct the UE to receive an updated system message of a first node cell.

In this embodiment of the present invention, a first node may be a micro base station, the first node cell may be a micro cell, and the second node may be a macro base station. Certainly, a device type of the first node or the second node is not limited in this embodiment of the present invention.

S302. The UE receives the system message of the first node cell or receives the updated system message of the first node cell according to the first message.

In this embodiment of the present invention, if the first message sent by the second node is an indication message used to instruct the UE to receive the system message of the first node cell, the UE may receive the system message of the first node cell according to the first message. If the first message sent by the second node is an indication message used to instruct the UE to receive the updated system message of the first node cell, the UE may receive the updated system message of the first node cell according to the first message.

By means of the message processing method provided in this embodiment of the present invention, UE can reside on a second node, and receive a paging message on the second node, and perform system message listening and cell measurement for a first node having good signal quality, and when needing to access a network, access the first node having good signal quality at first time, without a need for a first node to provide paging for the UE, thereby reducing an air interface resource.

In this embodiment of the present invention, corresponding to a type of the first message sent by the second node, there may be different implementation manners of receiving the system message of the first node cell and the updated system message of the first node cell, and the implementation manners are described one by one below in this embodiment of the present invention.

### Implementation manner 1 (1A):

The first message received by the UE is a configuration message, and the configuration message includes a paging configuration parameter of the first node cell.

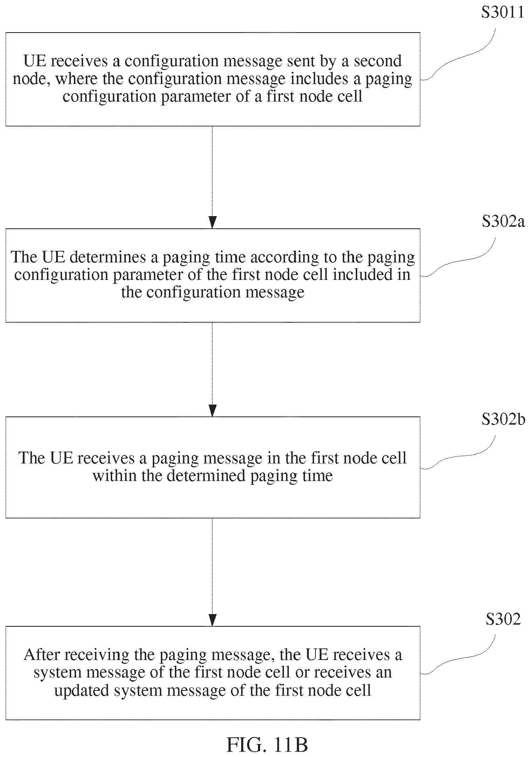

Before receiving the system message of the first node cell or receiving the updated system message of the first node cell according to the first message, the UE determines a paging time according to the paging configuration parameter of the first node cell, and receives a paging message in the first node cell within the paging time, where the paging message is used to notify the UE that the system message of the first node is updated or used to instruct the UE to receive the system message of the first node cell. An implementation process is shown in FIG. 11B.

S3011. UE receives a configuration message sent by a second node, where the configuration message includes a paging configuration parameter of a first node cell.

S302a. The UE determines a paging time according to the paging configuration parameter of the first node cell included in the configuration message. That the paging configuration parameter is used to determine a paging time may be one of the following possibilities: The paging configuration parameter is used by the UE to determine a paging time for receiving a paging message, used by the UE to determine a paging time for receiving a paging message sent by a first node, used to determine a time for receiving a paging message, used to determine a time for sending a paging message, or used to determine a time for sending a paging message by the node.

S302b. The UE receives a paging message in the first node cell within the determined paging time, where the paging message is used to notify the UE that a system message of a first node is updated or used to instruct the UE to receive a system message of the first node cell.

S302. After receiving the paging message, the UE receives the system message of the first node cell or receives an updated system message of the first node cell.

### Implementation manner 1 (1B):

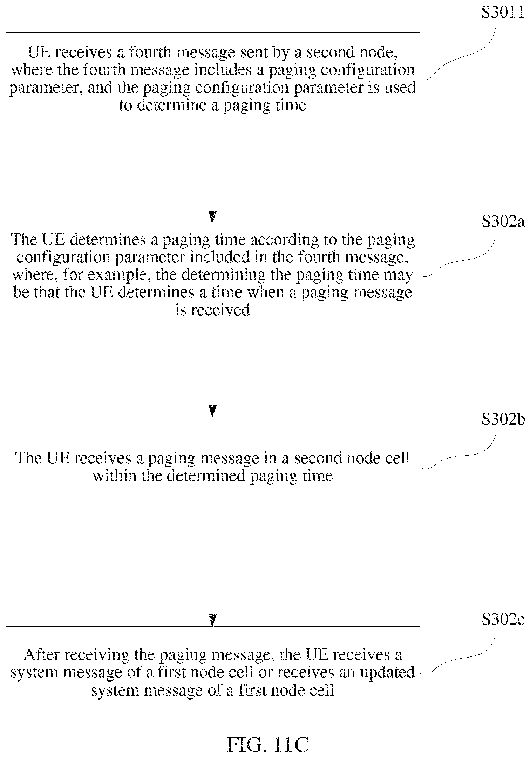

An implementation process of implementation manner 1 (1B) is shown in FIG. 11C.

S3011. UE receives a fourth message sent by a second node, where the fourth message includes a paging configuration parameter, and the paging configuration parameter is used to determine a paging time. That the paging configuration parameter is used to determine a paging time may be one of the following possibilities: The paging configuration parameter is used by the UE to determine a paging time for receiving a paging message, used to determine a time for receiving a paging message, used to determine a time for sending a paging message, or used to determine a time for sending a paging message by the node. Specifically, the paging time may be at least one of the following parameters: a paging cycle (Paging Cycle, for example, a default Paging Cycle), a paging frame (Paging Frame), or a paging occasion (paging occasion).

S302a. The UE determines a paging time according to the paging configuration parameter included in the fourth message. For example, the determining the paging time may be that the UE determines a time when a paging message is received.

S302b. The UE receives a paging message in a second node cell within the determined paging time, where the paging message is used to notify the UE that a system message of a first node is updated or used to instruct the UE to receive a system message of a first node cell.

S302c. After receiving paging message, the UE receives the system message of the first node cell or receives an updated system message of the first node cell.

In implementation manner 1 (1B), a first message received by UE is a paging message, and the paging message includes a paging configuration parameter. Before receiving a system message of a first node cell or receiving an updated system message of a first node cell according to the first message, the UE determines a paging time according to the paging configuration parameter, and receives a paging message in a second node cell within the paging time, where the paging message is used to notify the UE that a system message of a first node is updated or used to instruct the UE to receive the system message of the first node cell.

To sum up, a difference between implementation manner 1 (1B) and implementation manner 1 (1A) lies in that the UE determines a paging time according to the paging configuration parameter, and receives a paging message in the second node cell within the paging time, rather than receiving a paging message in the first node cell.

### Implementation manner 2:

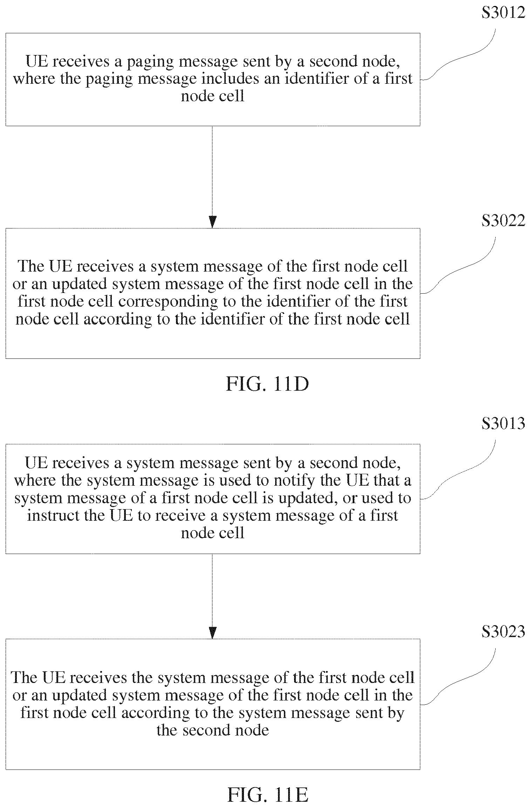

The first message received by the UE is a paging message, and the paging message includes an identifier of the first node cell. An implementation process is shown in FIG. 11D, and includes the following steps.

S3012. UE receives a paging message that includes an identifier of a first node cell and that is sent by a second node.

S3022. The UE receives a system message of the first node cell or an updated system message of the first node cell in the first node cell corresponding to the identifier of the first node cell according to the identifier of the first node cell.

In this embodiment of the present invention, after receiving a paging message sent by a second node, UE can learn, according to an identifier of a first node cell included in the paging message sent by the second node, that a system message of the first node cell is updated, and then the UE can receive an updated system message of the first node cell in the first node cell corresponding to the identifier of the first node cell; or the UE learns that the UE needs to receive a system message of the first node cell, and then the UE can receive the system message of the first node cell in the first node cell corresponding to the identifier of the first node cell.

### Implementation manner 3:

The first message received by the UE is a system message, and the system message is used to notify the UE that the system message of the first node cell is updated, or used to instruct the UE to receive the system message of the first node cell. An implementation process is shown in FIG. 11E, and includes the following steps.

S1013. UE receives a system message sent by a second node, where the system message is used to notify the UE that a system message of a first node cell is updated, or used to instruct the UE to receive a system message of a first node cell.

S3023. The UE receives the system message of the first node cell or an updated system message of the first node cell in the first node cell according to the system message sent by the second node.

### Implementation manner 4:

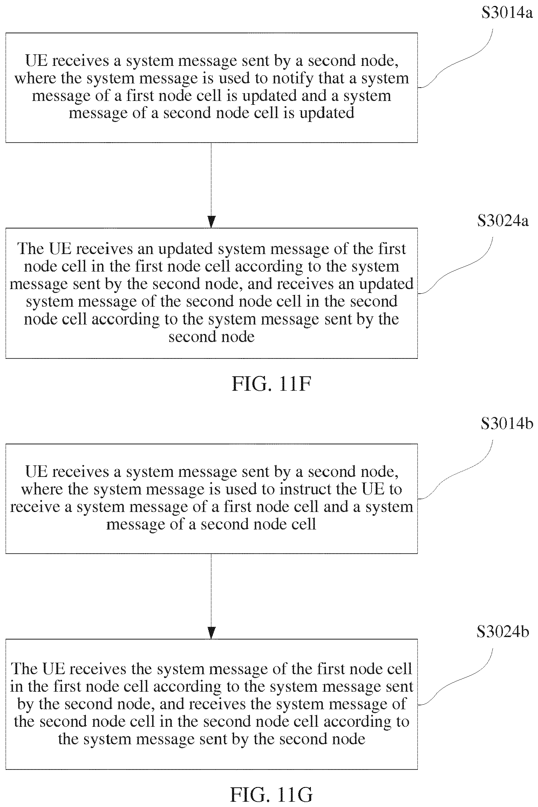

The first message received by the UE is a system message, and the system message is used to notify that the system message of the first node cell is updated and a system message of a second node cell is updated, or used to instruct the UE to receive the system message of the first node cell and a system message of a second node cell. Implementation processes are shown in FIG. 11F and FIG. 11G, and include the following steps.

S3014a. UE receives a system message sent by a second node, where the system message is used to notify that a system message of a first node cell is updated and a system message of a second node cell is updated.

S3024a. The UE receives an updated system message of the first node cell in the first node cell according to the system message sent by the second node, and receives an updated system message of the second node cell in the second node cell according to the system message sent by the second node.

S3014b. UE receives a system message sent by a second node, where the system message is used to instruct the UE to receive a system message of a first node cell and a system message of a second node cell.

S3024b. The UE receives the system message of the first node cell in the first node cell according to the system message sent by the second node, and receives the system message of the second node cell in the second node cell according to the system message sent by the second node.

In this embodiment of the present invention, after receiving a system message sent by a second node, UE can receive a system message or an updated system message in a first node cell and a second node cell, and then can receive a system message of the first node cell in the first node cell, or receive an updated system message of the first node cell in the first node cell.

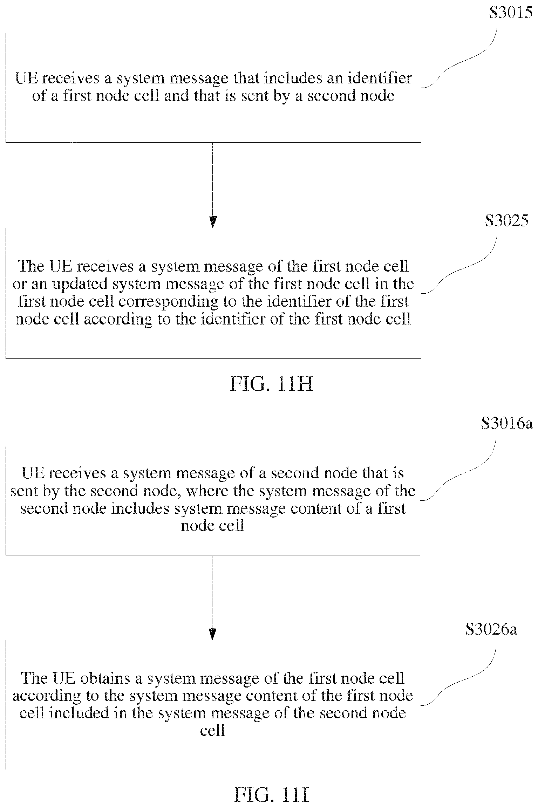

In implementation manner 3 and implementation manner 4 in the present invention, a first message received by UE is a system message, the system message includes an identifier of a first node cell, and the identifier of the first node cell is used to indicate that a system message of the first node cell is updated or instruct the UE to receive a system message of the first node cell. An implementation process of receiving the system message of the first node cell or an updated system message of the first node cell by the UE is shown in FIG. 11H, and includes the following steps.

S3015. UE receives a system message that includes an identifier of a first node cell and that is sent by a second node.

S3025. The UE receives a system message of the first node cell or an updated system message of the first node cell in the first node cell corresponding to the identifier of the first node cell according to the identifier of the first node cell.

In this embodiment of the present invention, after receiving a system message sent by a second node, UE can receive an updated system message of a first node cell in the first node cell corresponding to an identifier of the first node cell, or receive a system message of a first node cell in the first node cell corresponding to an identifier of the first node cell.

### Implementation manner 5:

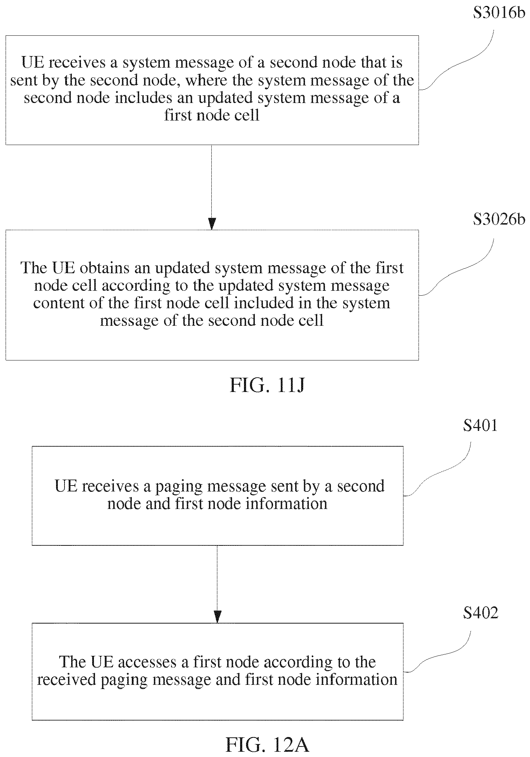

The first message received by the UE is a system message of the second node, and the system message of the second node includes system message content of the first node cell or an updated system message of the first node cell. Implementation processes are shown in FIG. 11I and FIG. 11J, and include the following steps.

S3016a. UE receives a system message of a second node that is sent by the second node, where the system message of the second node includes system message content of a first node cell.

S3026a. The UE obtains a system message of the first node cell according to the system message content of the first node cell included in the system message of the second node cell.

S3016b. UE receives a system message of a second node that is sent by the second node, where the system message of the second node includes an updated system message of a first node cell.

S3026b. The UE obtains an updated system message of the first node cell according to the updated system message content of the first node cell included in the system message of the second node cell.

It should be noted that, in this embodiment of the present invention, the first node may be a micro base station, the first node cell may be a micro cell, the second node may be a macro base station, and the second node cell may be a macro cell.

It should be further noted that, the method processes shown in FIG. 11A to FIG. 11J performed by a UE side in this embodiment of the present invention are applicable to the method processes shown in FIG. 9A to FIG. 9I. Therefore, for details that are not described in the processes of the message processing method performed by the UE side in this embodiment of the present invention, refer to FIG. 9A to FIG. 9I and the descriptions of the related method embodiments of FIG. 9A to FIG. 9I, and the details are not described herein again.

FIG. 12A is a flowchart of another message processing method on a UE side provided in an embodiment of the present invention. As shown in FIG. 12A, the method includes the following steps.

S401. UE receives a fifth message sent by a second node and first node information. The fifth message may be specifically a paging message. In many embodiments in subsequent content of this specification, an example in which the fifth message is a paging message is used to describe content of the present invention. Certainly, the fifth message may also be another type of message, for example, various possible signaling such as an RRC message, a MAC message, or a physical layer message. This is not limited herein in the present invention.

In this embodiment of the present invention, the paging message sent by the second node is used to page the UE to access a network, and the first node information is used to provide information about a first node to the UE.

It should be noted that, in this embodiment of the present invention, the UE unnecessarily simultaneously receives the paging message and the first node information, but may receive the paging message and the first node information one after another. For example, the paging message may be received first and then the first node information is received, or the first node information may be received first and then the paging message is received. This is not specifically limited in this embodiment of the present invention.

In this embodiment of the present invention, the first node information may be at least one of: an identifier of a first node cell, an identifier of a first node, an access configuration of a first node cell, an RRC configuration of the first node, a Packet Data Convergence Protocol (Packet Data Convergence Protocol, PDCP) configuration of the first node, a Radio Link Control layer protocol (Radio Link Control, RLC) configuration of the first node, a Media Access Control (Media Access Control, MAC) configuration of the first node, or a physical layer configuration of the first node. The first node information is described below by using examples in this embodiment of the present invention, but is not merely limited to the content in this embodiment of the present invention.

S402. The UE accesses a first node according to the received paging message and first node information.

In this embodiment of the present invention, the UE determines, according to the paging message sent by the second node, that the UE is paged to access a network, and can obtain, according to the first node information, information related to access to the first node, and therefore can initiate a random access to the first node cell, and access the first node. In a scenario in which the first node cell is not activated, the UE initiates a random access to the first node cell to activate the first node cell, and thereby accesses the first node.

In this embodiment of the present invention, after accessing the first node, the UE can, for example, establish an RRC connection, and then can communicate with a network.

In this embodiment of the present invention, corresponding to information about the first node information determined by the second node, there may be different implementation manners of accessing the first node, and the implementation manners are described one by one below in this embodiment of the present invention.

### Implementation manner 1:

The user equipment receives the paging message sent by the second node, where the paging message includes the identifier of the first node and/or the identifier of the first node cell; or the first node information includes the identifier of the first node cell, and the identifier of the first node cell is included in a second message.

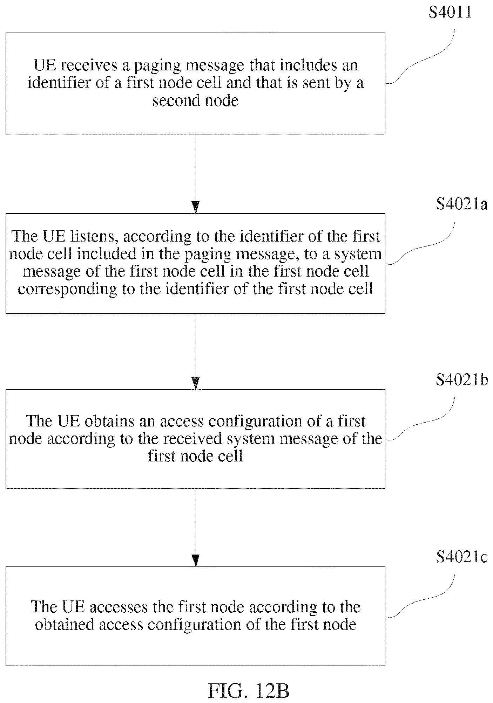

Optionally, in this embodiment of the present invention, the second message may be the fifth message. That is, the second message may be a paging message. An example in which the second message is a paging message used by the second node to page the UE to access a network is used below for description in this embodiment of the present invention. An implementation process is shown in FIG. 12B, and includes the following steps.

S4011. UE receives a paging message that includes an identifier of a first node cell and that is sent by a second node. The paging message is used to page the UE.

S4021a. The UE listens, according to the identifier of the first node cell or an identifier of a first node that is included in the paging message, to a system message of the first node cell in the first node cell corresponding to the identifier.

For example, the UE listens, according to the identifier of the first node cell included in the paging message, to the system message of the first node cell in the first node cell corresponding to the identifier of the first node cell.

S4021b. The UE obtains an access configuration of the first node according to the received system message of the first node cell.

S4021c. The UE accesses the first node according to the obtained access configuration of the first node.

Certainly, as to how the UE accesses the first node cell after receiving the paging message that includes the identifier of the first node cell or the identifier of the first node and that is sent by the second node, there may be another manner. This is not limited in the present invention. For example, it may also be that the UE has obtained an access configuration of the first node cell (specifically, the UE may obtain the access configuration from the second node, or may obtain the access configuration from another node. This is not limited in the present invention.), and thereby the UE accesses the first node according to the access configuration.

### Implementation manner 2:

The first node information received by the UE includes an access configuration of the first node, and the access configuration of the first node is included in a second message.

In this embodiment of the present invention, the second message may be a second message that is sent to the UE by the second node, the first node, or a third node. In this embodiment of the present invention, the third node is a node that is different from the first node and the second node (A device type of the third node is similar to the definition of the first node or the second node, and is not repeated herein.).

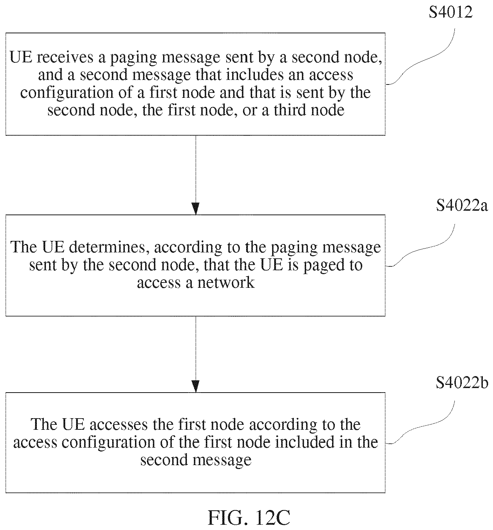

Optionally, in this embodiment of the present invention, the second message may be the fifth message. That is, the second message may be a paging message, or may not be a paging message. An example in which the second message is not a paging message is used below for description in this embodiment of the present invention. An implementation process is shown in FIG. 12C, and includes the following steps.

S4012. UE receives a paging message sent by a second node, and a second message that includes an access configuration of a first node and that is sent by the second node, the first node, or a third node.

The paging message sent by the second node is used to page the UE (that is, to send paging information to UE in an idle state. to transmit paging information to a UE in RRC_IDLE). Specifically, the paging information may be provided by an upper layer, and thereby the UE may trigger an RRC connection establishment procedure. For example, the paging message is used to notify that the UE receives a call (The paging information is provided to upper layers, which in response may initiate RRC connection establishment, e.g. to receive an incoming call.). In this embodiment of the present invention, an identifier of a first node cell may be, for example, a PCI or an ECGI.

S4022a. The UE determines, according to the paging message sent by the second node, that the UE is paged.

S4022b. The UE accesses the first node according to the access configuration of the first node included in the second message.

It should be noted that, in this embodiment of the present invention, the paging message and the second message received by the UE may be simultaneously received, or may be received one after another. For example, the paging message may be received first and then the second message is received, or the second message may be received first and then the paging message is received. A time order in which the paging message and the second message are received is not limited herein in the present invention.

Specifically, for example, the UE may first receive the second message, and obtain the access configuration of the first node included in the second message. After receiving the paging message subsequently, the UE determines that the UE needs to access a network. The UE accesses, according to the access configuration of the first node included in the obtained second message, by accessing the first node, the network for communication.

In this embodiment of the present invention, when the second message is sent by the second node, the second message may be the fifth message. That is, the second message may be the paging message.

It should be noted that, in this embodiment of the present invention, for an implementation process in which the second message is a paging message, the second node only needs to determine the paging message, and include the access configuration of the first node in the paging message, without a need of separately determining and sending the second message. Details of a specific implementation process are not described herein again.

### Implementation manner 3:

The first node information received by the UE includes the first node information including the identifier of the first node cell and/or the identifier of the first node, and an access configuration of the first node. The identifier of the first node cell and/or the identifier of the first node are/is included in the paging message sent by the second node, and the access configuration of the first node is included in the second message.

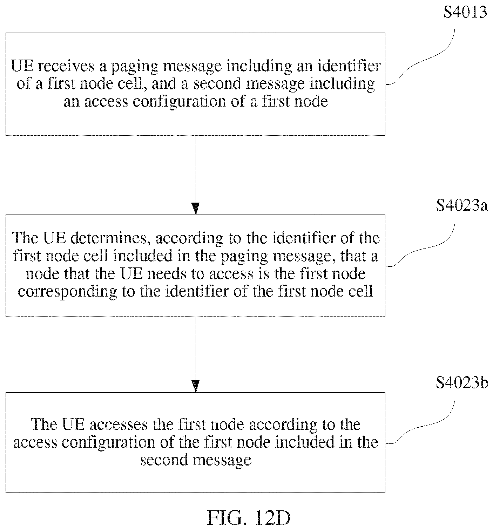

Optionally, in this embodiment of the present invention, the second message may be the fifth message. That is, the second message may be a paging message, or may not be a paging message. An example in which the second message is not a paging message is used below for description in this embodiment of the present invention. An implementation process is shown in FIG. 12D.

S4013. UE receives a paging message including an identifier of a first node cell or an identifier of a first node, and a second message including an access configuration of the first node.

It should be noted that, in this embodiment of the present invention, the paging message and the second message received by the UE may be simultaneously received, or may be received one after another. For example, the paging message may be received first and then the second message is received, or the second message may be received first and then the paging message is received. A time order in which the paging message and the second message are received is not limited herein in the present invention.

S4023a. The UE determines, according to the identifier of the first node cell included in the paging message, that a node that the UE needs to access is the first node corresponding to the identifier of the first node cell.

S4023b. The UE accesses the first node according to the access configuration of the first node included in the second message.

It should be noted that, in this embodiment of the present invention, the paging message and the second message may also be a same message, and the message includes the identifier of the first node cell or the identifier of the first node, and includes the access configuration of the first node. For an implementation process in which the second message and the paging message are a same message, the second node only needs to determine the paging message, and include the access configuration of the first node in the paging message, without a need of separately determining and sending the second message. Details of a specific implementation process are not described herein again.

### Implementation manner 4:

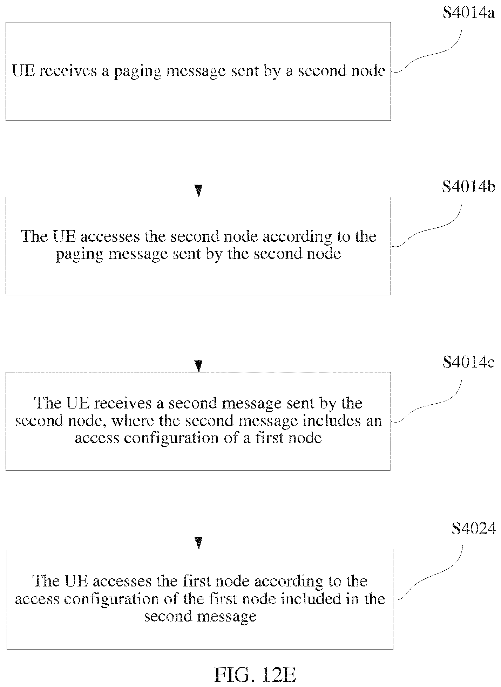

The first node information received by the UE includes an access configuration of the first node included in a second message. An implementation process is shown in FIG. 12E.

S4014a. UE receives a paging message sent by a second node.

S4014b. The UE accesses the second node according to the paging message sent by the second node; or
the UE determines, according to the paging message sent by the second node, that the user equipment is paged, or is paged to access a network, or is paged to establish an RRC connection, or determines that the UE needs to access a network, or determines that the UE needs to establish an RRC connection.

S4014c. The UE receives a second message sent by the second node, where the second message includes an access configuration of a first node.

S4024. The UE accesses the first node according to the access configuration of the first node included in the second message.

By means of the message processing method provided in this embodiment of the present invention, UE residing on a second node can obtain first node information, and after the second node sends a paging message, the UE can obtain information related to access to a first node, and access the first node. Therefore, by means of this embodiment of the present invention, without a need for the UE to receive a paging message sent by the first node, the UE can reside on the second node and be paged by the second node, and the first node does not need to perform paging, thereby reducing an air interface resource.

It should be noted that, in this embodiment of the present invention, the first node may be a micro base station, the first node cell may be a micro cell, the second node may be a macro base station, and the second node cell may be a macro cell.

It should be further noted that, the method processes shown in FIG. 12A to FIG. 12E performed by a UE side in this embodiment of the present invention are applicable to the method processes shown in FIG. 10A to FIG. 10D. Therefore, for details that are not described in the processes of the message processing method performed by the UE side in this embodiment of the present invention, refer to FIG. 10A to FIG. 10D and the descriptions of the related method embodiments of FIG. 10A to FIG. 10D, and the details are not described herein again.

The message processing method provided in the embodiments of the present invention is described by using examples below in combination with specific application scenarios in embodiments of the present invention.

In the embodiments of the present invention, an application scenario in which a first node is a macro base station, a second node is a micro base station, a cell of the macro base station is a macro cell, and a cell of the micro base station is a micro cell, and UE camps on the macro cell, and receives a system message of the micro cell but does not receive a paging message of the micro cell is used as an example for description.

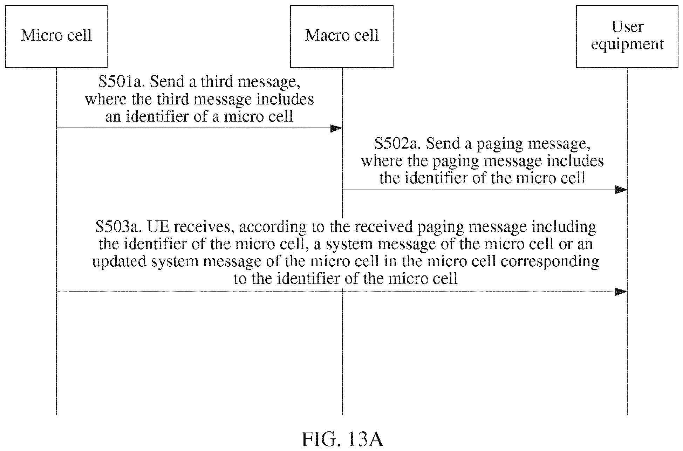

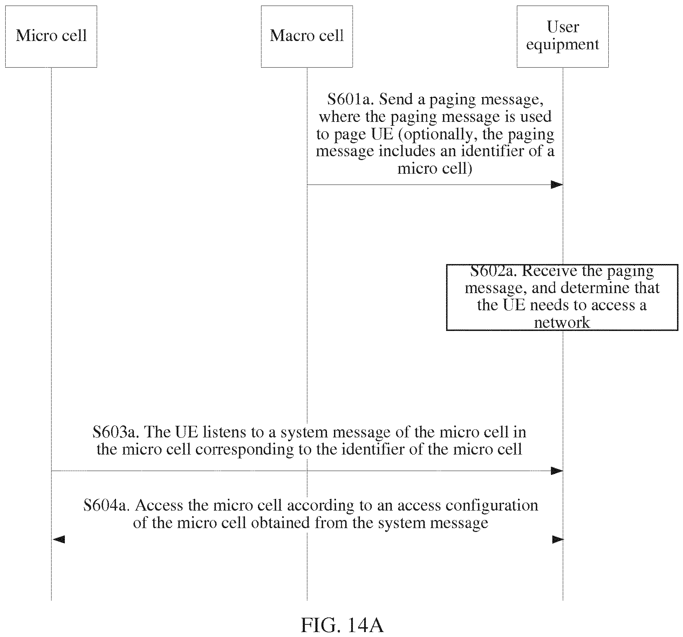

It should be noted that, in the following multiple embodiments (refer to FIG. 13A to FIG. 13E, and FIG. 14A to FIG. 14C, and the descriptions of the related method embodiments of FIG. 13A to FIG. 13E, and FIG. 14A to FIG. 14C), an example in which the first node is a micro base station, and the second node is a macro base station is used for description. A cell of the macro base station is a macro cell, and a cell of the micro base station is a micro cell. Therefore, in the embodiments, as an execution body, the macro cell may also be replaced with the macro base station, and the micro cell may be replaced with the micro base station. Certainly, a device type of the first node or the second node is not limited in the present invention.

In the embodiments of the present invention, when the macro cell determines that the macro cell needs to notify the UE that the system message of the micro cell is updated, or instruct the UE to receive the system message of the micro cell, the macro cell sends an indication message to the UE, to notify the UE that the system message of the micro cell is updated, or instruct the UE to receive the system message of the micro cell.

In the embodiments of the present invention, the indication message sent to the UE by the macro cell may be a paging message, a configuration message, or a system message.

In an embodiment of the present invention, the indication message sent to the UE by the macro cell may be a paging message, and the paging message sent to the UE includes an identifier of the micro cell. By using the paging message including the identifier of the micro cell, the UE is notified that the system message of the micro cell is updated or the UE is instructed to receive the system message of the micro cell, so that the UE receives the system message of the micro cell or an updated system message of the micro cell according to the received paging message sent by the macro cell. An interaction process is shown in FIG. 13A.

S501a. A micro cell sends a third message to a macro cell, where the third message is used to indicate that a system message of the micro cell is updated, or used to instruct UE to receive a system message of the micro cell.

Specifically, the third message may include an identifier of the micro cell.

It should be noted that, in this embodiment of the present invention, S501 is an optional step. That is, the micro cell may unnecessarily send the third message to the macro cell.

S502a. The macro cell sends a paging message to the UE, where the paging message is used to notify the UE that the system message of the micro cell is updated or instruct the UE to receive the system message of the micro cell.

Specifically, the paging message includes the identifier of the micro cell, so that the UE updates the system message of the micro cell or receives the system message of the micro cell according to the identifier of the micro cell. In the present invention, the paging message is merely used as an example for description, and the paging message may also be another message. This is not limited in the present invention.

S503a. The UE receives the paging message that includes an identifier of the micro cell and that is sent by the macro cell, and the UE receives the system message of the micro cell or an updated system message of the micro cell in the micro cell corresponding to the identifier of the micro cell included in the paging message according to the identifier of the micro cell.

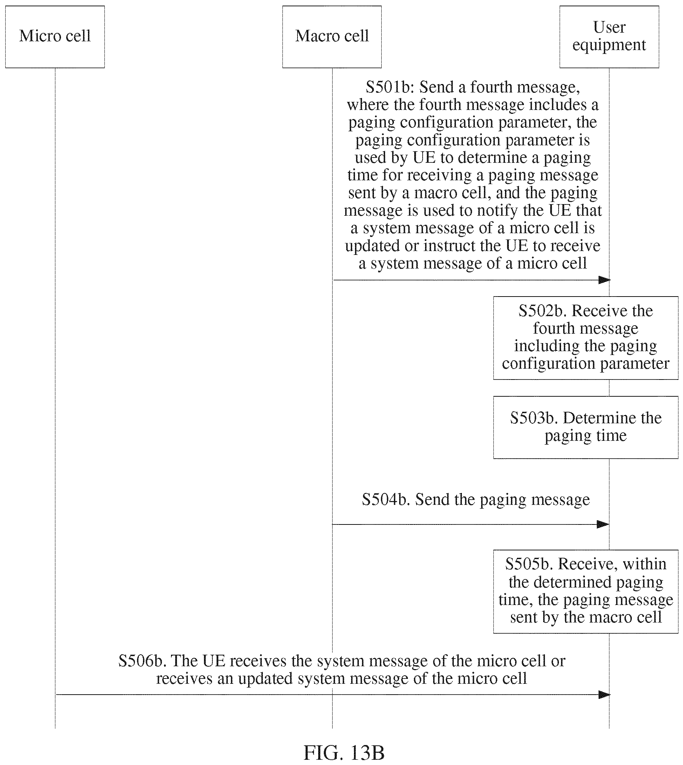

In an embodiment of the present invention, the indication message sent to the UE by the macro cell may be a fourth message, and the fourth message includes a paging configuration parameter. The UE determines, by using the fourth message including the paging configuration parameter, a paging time for receiving a paging message sent by the macro cell, where the paging message is used to notify the UE that the system message of the micro cell is updated or instruct the UE to receive the system message of the micro cell. An interaction process is shown in FIG. 13B.

S501b: A macro cell sends a fourth message to UE, where the fourth message includes a paging configuration parameter, the paging configuration parameter is used by the UE to determine a paging time for receiving a paging message sent by the macro cell, and the paging message is used to notify the UE that a system message of a micro cell is updated or instruct the UE to receive a system message of a micro cell.

In this embodiment of the present invention, the paging configuration parameter may be configured by the macro cell on its own, or may be obtained through interaction with the micro cell.

S502b. The UE receives the fourth message that includes the paging configuration parameter and that is sent by the macro cell.

S503b. The UE determines the paging time according to the paging configuration parameter.

S504b. The macro cell sends the paging message to the UE, where the paging message is used to notify the UE that the system message of the micro cell is updated or instruct the UE to receive the system message of the micro cell.

S505b. The UE receives, within the determined paging time, the paging message sent by the macro cell.

S506b. After the paging message is received, receive the system message of the micro cell or receive an updated system message of the micro cell.

In addition, there is also another possible embodiment. In this embodiment of the present invention, the indication message sent to the UE by the macro cell may be a configuration message, and the configuration message includes a paging configuration parameter of the micro cell. The UE determines, by using the configuration message including the paging configuration parameter of the micro cell, a paging time for receiving a paging message sent by the micro cell, where the paging message is used to notify the UE that the system message of the micro cell is updated or instruct the UE to receive the system message of the micro cell.

S501b: A macro cell sends a configuration message to UE, where the configuration message includes a paging configuration parameter of a micro cell, the paging configuration parameter of the micro cell is used by the UE to determine a paging time for receiving a paging message sent by the micro cell, and the paging message is used to notify the UE that a system message of the micro cell is updated or instruct the UE to receive a system message of the micro cell. In this embodiment of the present invention, the paging configuration parameter of the micro cell may be configured by the macro cell on its own, or may be obtained through interaction with the micro cell.

S502b. The UE receives the configuration message that includes the paging configuration parameter of the micro cell and that is sent by the macro cell.

S503b. The UE determines the paging time according to the paging configuration parameter.

S504b. The micro cell sends the paging message to the UE, where the paging message is used to notify the UE that the system message of the micro cell is updated or instruct the UE to receive the system message of the micro cell.

S505b. The UE receives, within the determined paging time, the paging message sent by the micro cell.

S506b. After the paging message is received, receive the system message of the micro cell or receive an updated system message of the micro cell.

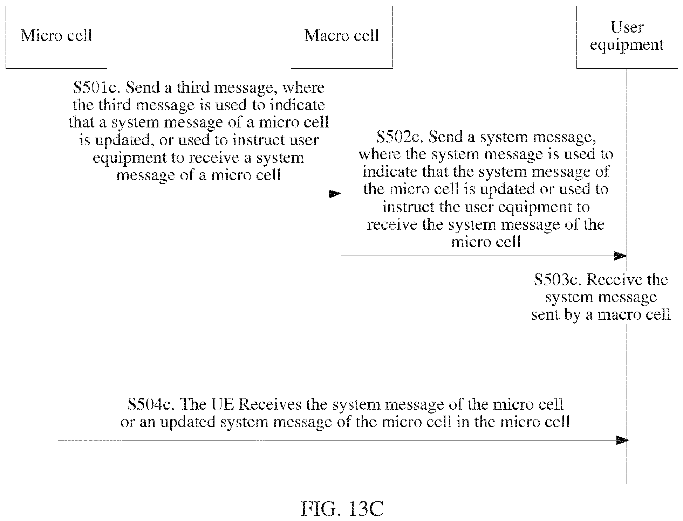

In an embodiment of the present invention, the indication message sent to the UE by the macro cell may be a system message. By using the system message, the macro cell notifies the UE that the system message of the micro cell is updated, or instructs the UE to receive the system message of the micro cell. In a specific implementation process, the system message may be dedicatedly used to indicate to UE that the system message of the micro cell is updated, or instruct UE to receive the system message of the micro cell, so that the UE receives the system message of the micro cell in the micro cell, or receives the updated system message of the micro cell in the micro cell. An interaction process is shown in FIG. 13C.

S501c. A micro cell sends a third message to a macro cell, where the third message is used to indicate that a system message of the micro cell is updated, or used to instruct UE to receive a system message of the micro cell.

Optionally, the third message may include an indication message, and the indication message may have many forms. For example, the third message may include a system message update identifier of the micro cell or a cell identifier of the micro cell.

It should be noted that, in this embodiment of the present invention, S501c is an optional step. That is, the micro cell may unnecessarily send the third message to the macro cell.

S502c. The macro cell sends a system message to the UE, where the system message is used to indicate that the system message of the micro cell is updated or used to instruct the UE to receive the system message of the micro cell.

Specifically, the system message may include a system message identifier of the micro cell.

S503c. The UE receives the system message sent by the macro cell.

Specifically, for example, the system message may include a system message indicator of the micro cell, and thereby the UE receives the system message of the micro cell or an updated system message of the micro cell according to the system message indicator of the micro cell. The system message indicator of the micro cell may be the cell identifier of the micro cell, or may be the system message indicator (indicator) of the micro cell, or may be the cell identifier of the micro cell and the system message indicator (indicator) of the micro cell, or may be another form of indication information. To sum up, the system message indicator of the micro cell is used by the UE to obtain, from the received system message of the macro cell, an indication, for indicating that the system message of the micro cell is updated, or for instructing the UE to receive the system message of the micro cell.

S504c. The UE receives the system message of the micro cell or an updated system message of the micro cell in the micro cell.

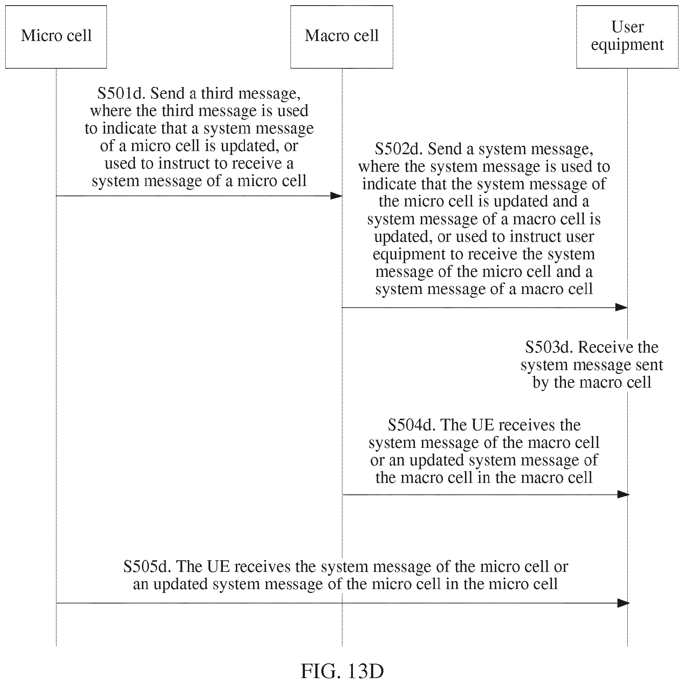

In an embodiment of the present invention, the system message sent by the macro cell may also be used to indicate that the system message of the micro cell is updated and a system message of the macro cell is updated, or used to instruct the UE to receive a system message of the macro cell and the system message of the micro cell, so that the UE receives a system message or an updated system message in the micro cell and the macro cell. An interaction process is shown in FIG. 13D.

S501d. A micro cell sends a third message to a macro cell, where the third message is used to indicate that a system message of the micro cell is updated, or used to instruct to receive a system message of the micro cell.

Specifically, for example, the third message may include a system message update identifier of the micro cell or a cell identifier of the micro cell.

It should be noted that, in this embodiment of the present invention, S501 is an optional step. That is, the micro cell may unnecessarily send the third message to the macro cell.

S502d. The macro cell sends a system message to UE, where the system message is used to indicate that the system message of the micro cell is updated and a system message of the macro cell is updated, or used to instruct the UE to receive the system message of the micro cell and instruct the UE to receive a system message of the macro cell.

S503d. The UE receives the system message sent by the macro cell.

Specifically, for example, the system message may include a message indication, and thereby the UE receives the system message of the micro cell or an updated system message of the micro cell according to the message indication. The message indication may be the cell identifier of the micro cell, or may be a system message indicator (indicator) of the micro cell, or may be the cell identifier of the micro cell and the system message indicator (indicator) of the micro cell, or may be another form of indication information. To sum up, the message indication is used by the UE to obtain, from the received system message of the macro cell, an indication, for indicating that the system message of the micro cell is updated, or for instructing the UE to receive the system message of the micro cell.

S504d. The UE receives the system message of the macro cell or an updated system message of the macro cell in the macro cell.

S505d. The UE receives the system message of the micro cell or an updated system message of the micro cell in the micro cell.

An order in which step 504d and step 505d are performed is not limited in the present invention, and may be determined according to specific implementation. For example, step S504d is performed first, or step S505d is performed first, or the two steps are simultaneously performed.

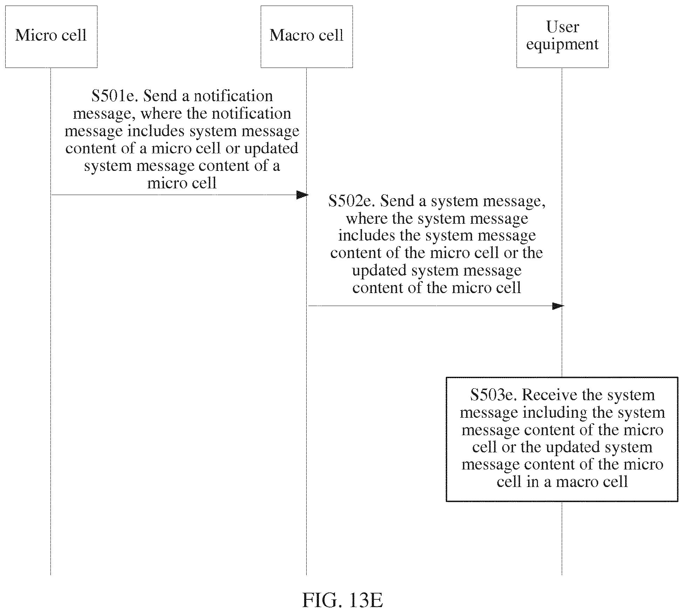

In an embodiment of the present invention, the indication message sent to the UE by the macro cell may be a system message. The system message includes system message content of the micro cell or updated system message content of the micro cell, so that the UE directly obtains the system message content of the micro cell or the updated system message content of the micro cell. An interaction process is shown in FIG. 13E.

S501e. A micro cell sends a third message to a macro cell, where the third message includes a system message of the micro cell or updated system message content of the micro cell.

S502e. The macro cell sends a system message to UE.

Specifically, the system message may include system message content or updated system message content of a cell of another station (a station other than the macro cell). The another station may be one or more stations (for example, n stations, where n is a natural number greater than 1) other than a macro base station. For example, the system message includes one or more of the following: system message content or updated system message content of a cell 1 of a first micro station, system message content or updated system message content of a cell 2 of the first micro station, system message content or updated system message content of a cell 3 of a second micro station, system message content or updated system message content of a cell 4 of a third micro station, system message content or updated system message content of a cell 5 of a second macro station, or the like.

Certainly, optionally, the system message may further include system message content of the macro cell, or updated system message content of the macro cell. This is not limited in the present invention.

In this embodiment, an example in which the macro cell sends a system message to the UE, and the system message includes the system message content or the updated system message content of the micro cell is used to describe content of the present invention.

S503e. The UE receives the system message including the system message content of the micro cell or the updated system message content of the micro cell in the macro cell.

By means of the message processing method provided in this embodiment of the present invention, UE residing in a macro cell obtains a system message of a micro cell or an updated system message of a micro cell, and when a network pages the UE to access the network, the UE can initiate a random access in the micro cell according to the obtained system message (for example, the system message includes latest configuration information of the micro cell, for example, access configuration information), and the micro cell does not need to provide paging for the UE, thereby reducing an air interface resource.

Another specific application scenario of the embodiments of the present invention may be, for example, that a first node is a macro base station, a second node is a micro base station, a cell of the macro base station is a macro cell, and a cell of the micro base station is a micro cell; UE camps on the macro cell; the macro cell sends a paging message to the UE, where the paging message is used to page the UE; and the UE can send first node information to the UE by using the macro cell, where the first node information is information related to the micro cell (which is referred to as "micro cell related information" below), and then access the micro cell.

It should be noted that, in the following multiple embodiments (refer to FIG. 14A to FIG. 14C, and the descriptions of the related method embodiments of FIG. 14A to FIG. 14C), an example in which the first node is a micro base station, and the second node is a macro base station is used for description. A cell of the macro base station is a macro cell, and a cell of the micro base station is a micro cell. Therefore, in the embodiments, as an execution body, the macro cell may also be replaced with the macro base station, and the micro cell may be replaced with the micro base station. Certainly, a device type of the first node or the second node is not limited in the present invention.

In the embodiments of the present invention, the micro cell related information that is sent to the UE by the macro cell may be an identifier of the micro cell, an access configuration of the micro cell, the identifier of the micro cell and the access configuration of the micro cell, or the like.

In an embodiment of the present invention, for an implementation process in which the micro cell related information that is sent to the UE by the macro cell is the identifier of the micro cell, refer to FIG. 14A.

S601a. A macro cell sends a paging message to UE, where the paging message includes an identifier of a micro cell.

S602a. The UE receives the paging message sent by the macro cell, and determines that the UE needs to access a network.

S603a. The UE listens, according to the identifier of the micro cell included in the paging message, to a system message of the micro cell in the micro cell corresponding to the identifier of the micro cell.

S604a. The UE obtains an access configuration of the micro cell in the micro cell, and accesses the micro cell.

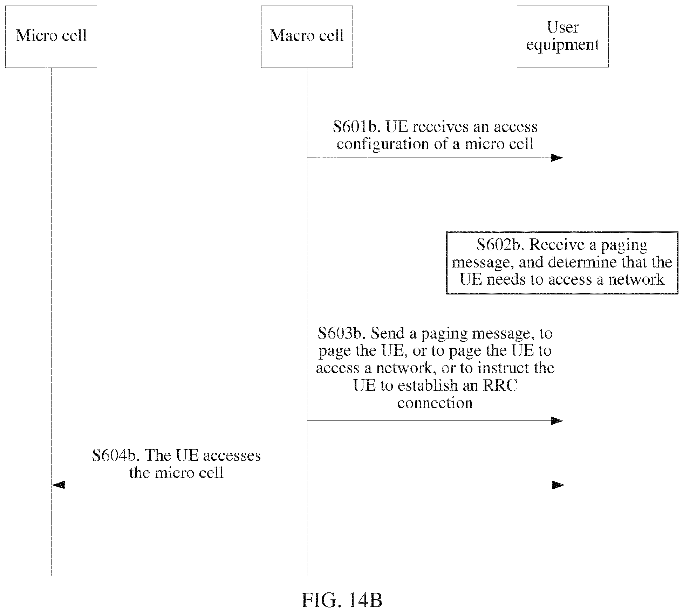

In an embodiment of the present invention, for an implementation process in which the micro cell related information that is sent to the UE by the macro cell is the access configuration of the micro cell, refer to FIG. 14B.

S601b. UE receives an access configuration of a micro cell. The access configuration of the micro cell may be sent by a macro cell, or may be sent by another cell other than the macro cell or another node. An example in which the access configuration of the micro cell is sent by the macro cell is used in the figure for description.

In this embodiment of the present invention, the access configuration of the micro cell may be included, for example, in an RRC connection reconfiguration message, or a system message of the macro cell. This is not limited in the present invention.

S602b. The macro cell sends a paging message to UE.

S603b. The UE receives the paging message sent by the macro cell, and determines that the UE needs to access a network.

It should be noted that, step S601b is a relatively independent step, and a time order in which step S601b, step S602b, and step S603b are performed is not restricted. For example, step S601b is unnecessarily performed before step S602b. For example, step S601b may occur after step S601b or S602b. For example, S603b may occur simultaneously with step S601b or S602b.

S604b. The UE accesses the micro cell according to the obtained access configuration of the micro cell.

In this embodiment of the present invention, the access configuration of the micro cell may be included, for example, in an RRC connection reconfiguration message, or a system message of the macro cell. This is not limited in the present invention.

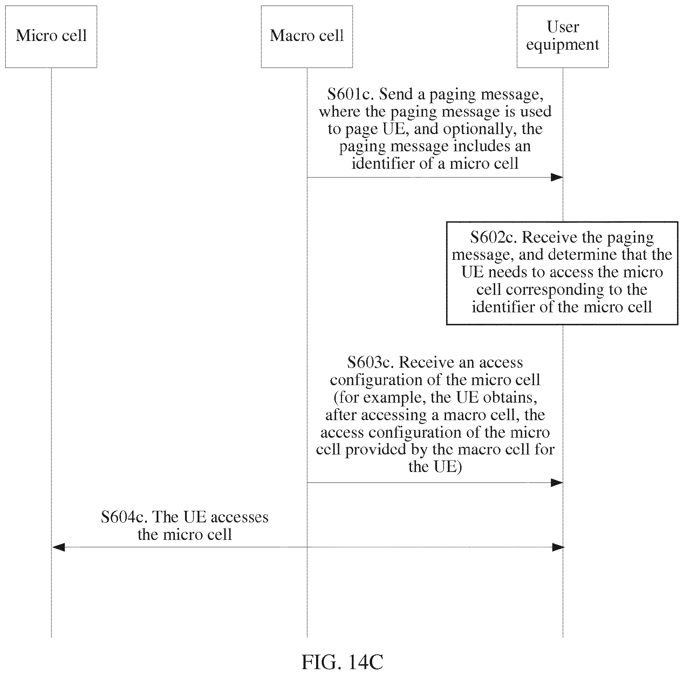

In an embodiment of the present invention, for an implementation process in which the micro cell related information that is sent to the UE by the macro cell is the identifier of the micro cell and/or the access configuration of the micro cell, refer to FIG. 14C.

S601c. A macro cell sends a paging message to UE, where optionally, the paging message includes an identifier of a micro cell.

S602c. The UE receives the paging message sent by the macro cell, and determines that the UE needs to access the micro cell corresponding to the identifier of the micro cell.

S603c. The UE obtains an access configuration of the micro cell.

In this embodiment of the present invention, the access configuration of the micro cell may be sent by a macro cell, or may be sent by another cell other than the macro cell. An example in which the access configuration of the micro cell is sent by the macro cell is used in the figure for description.

Specifically, in this embodiment of the present invention, after receiving the paging message sent by the macro cell, in S603c, the UE accesses the macro cell, and then receives a message (for example, an RRC message of the macro cell, or a system message of the macro cell) including the access configuration of the micro cell in the macro cell.

S604c. The UE accesses the micro cell according to the received access configuration of the micro cell.

The foregoing message processing method provided in this embodiment of the present invention may be applied to a scenario in which UE does not listen to a system message of a micro cell in real time, and when the UE needs to access the micro cell, the UE obtains an access configuration of the micro cell by using an identifier of the micro cell or an access configuration of the micro cell that is sent by a macro cell, and accesses the micro cell.

It should be noted that, in the embodiments of the present invention, the step reference numbers shown in the embodiments and the figures do not limit a time order in which the steps are performed.

It should be noted that, in the embodiments of the present invention, a macro cell and a micro cell are used as examples to describe content of the present invention. The macro cell may be replaced with a first cell or a primary cell or a first node or a first node cell, and the micro cell may be replaced with a second cell or a secondary cell or a second node or a second node cell. The first node in the present invention may be a micro base station, an eNB, a macro base station, a relay station (Relay), a pico eNB, a small cell, an SeNB, an HeNB, a particular network element device, or the like. This is not limited in the present invention. Similarly, the second node may be a macro base station, a relay station (Relay), a pico eNB, a small cell, an SeNB, an HeNB, a micro base station, a particular network element device, or the like. This is not limited in the present invention.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A node device, comprising:
a determining unit, configured to determine a first message, wherein the first message is used to instruct user equipment to receive a system message of a first node cell or used to indicate that a system message of a first node cell is updated; and
a sending unit, configured to send the first message determined by the determining unit to the user equipment.

2. The node device according to claim 1, wherein the first message comprises at least one of the following:
a paging configuration parameter of the first node cell, an identifier of a first node, an identifier of the first node cell, a system message indicator of the first node cell, system message content of the first node cell, or updated system message content of the first node cell.

3. The node device according to claim 1 or 2, wherein the first message is a configuration message, a paging message, or a system message.

4. The node device according to claim 1, wherein the first message is a paging message, and the paging message comprises at least one of the following:
an identifier of a first node, an identifier of the first node cell, or a system message indicator of the first node cell.

5. The node device according to any one of claims 1 to 4, wherein the first message is a paging message; and
the sending unit is further configured to: before sending the first message to the user equipment, send a fourth message to the user equipment, wherein the fourth message comprises a paging configuration parameter.

6. The node device according to claim 1, wherein the first message is a configuration message or a system message, and the configuration message or the system message comprises a paging configuration parameter of the first node cell.

7. The node device according to claim 1, wherein the first message is further used to:
indicate that a system message of a second node cell corresponding to the node device is updated, or used to instruct the user equipment to receive a system message of a second node cell corresponding to the node device.

8. The node device according to any one of claims 1 to 7, wherein the node device further comprises:
a receiving unit, configured to: before the determining unit determines the first message, receive a third message sent by the first node, wherein the third message is used to indicate that the system message of the first node cell is updated, or used to instruct the user equipment to receive the system message of the first node cell.

9. The node device according to claim 8, wherein the third message comprises at least one of: the paging configuration parameter of the first node cell, the identifier of the first node, the identifier of the first node cell, the system message indicator of the first node cell, the system message content of the first node cell, or the updated system message content of the first node cell.

10. The node device according to any one of claims 1 to 9, wherein the user equipment camps on the second node cell corresponding to the node device.

11. The node device according to any one of claims 1 to 10, wherein
the user equipment receives a paging message only from the second node cell corresponding to the node device; or
the user equipment receives a paging message in the second node cell corresponding to the node device, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

12. The node device according to claim 1, 10, or 11, wherein
the user equipment receives the system message of the first node cell; and/or
the user equipment measures the first node cell.

13. A node device, comprising:
a determining unit, configured to determine first node information and a fifth message, wherein the fifth message is used to page user equipment, or used to instruct user equipment to access a network, or used to instruct user equipment to establish a radio resource control RRC connection, and the first node information is used to provide information about a first node to the user equipment; and
a sending unit, configured to send the first node information and the fifth message determined by the determining unit to the user equipment.

14. The node device according to claim 13, wherein the first node information comprises at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

15. The node device according to claim 13, wherein the first node information comprises an identifier of a first node cell or an identifier of the first node, and the first node information is comprised in a second message.

16. The node device according to claim 13 or 15, wherein the first node information comprises an access configuration of the first node, and the access configuration of the first node is comprised in the second message that is sent to the user equipment by the node device.

17. The node device according to claim 15 or 16, wherein the second message is the fifth message.

18. The node device according to any one of claims 13 to 17, wherein the fifth message is a paging message.

19. The node device according to claim 15 or 16, wherein the second message comprises:
a radio resource control RRC connection reconfiguration message or a system message.

20. The node device according to any one of claims 13 to 19, wherein the user equipment camps on a second node cell corresponding to the node device.

21. The node device according to any one of claims 13 to 20, wherein
the user equipment receives a paging message only from the second node cell corresponding to the node device; or
the user equipment receives a paging message in the second node cell corresponding to the node device, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

22. The node device according to claim 13, 20, or 21, wherein
the user equipment receives a system message of the first node cell; and/or
the user equipment measures the first node cell.

23. User equipment, comprising:
a first receiving unit, configured to receive a first message sent by a second node, wherein the first message is used to instruct the user equipment to receive a system message of a first node cell, or used to instruct the user equipment to receive an updated system message of a first node cell; and
a second receiving unit, configured to receive the system message of the first node cell or receive the updated system message of the first node cell according to the first message received by the first receiving unit.

24. The user equipment according to claim 23, wherein the first message comprises at least one of: a paging configuration parameter of the first node cell, an identifier of a first node, an identifier of the first node cell, a system message indicator of the first node cell, system message content of the first node cell, or updated system message content of the first node cell.

25. The user equipment according to claim 23 or 24, wherein the first message is a configuration message, a paging message, or a system message.

26. The user equipment according to claim 23, wherein the first message is a paging message, and the paging message comprises at least one of the following: an identifier of a first node, an identifier of the first node cell, or a system message indicator of the first node cell; and
the second receiving unit is specifically configured to:
receive the system message of the first node cell or the updated system message of the first node cell in the first node cell according to the paging message.

27. The user equipment according to any one of claims 23 to 26, wherein the first message is a paging message;
the first receiving unit is further configured to:
before the second receiving unit receives the system message of the first node cell or receives the updated system message of the first node cell according to the first message, receive a fourth message sent by the second node, wherein the fourth message comprises the paging configuration parameter of the first node cell;
the user equipment further comprises:
a determining unit, configured to determine a paging time according to the paging configuration parameter of the first node cell; and
the first receiving unit is further configured to:
receive a paging message in a second node cell within the paging time determined by the determining unit, wherein the paging message is used to indicate that a system message of the first node is updated or used to instruct the user equipment to receive the system message of the first node cell.

28. The user equipment according to claim 23, wherein the first message is a configuration message or a system message, and the configuration message or the system message comprises a paging configuration parameter of the first node cell;
the user equipment further comprises:
a determining unit, configured to: before the second receiving unit receives the system message of the first node cell or receives the updated system message of the first node cell according to the first message, determine a paging time according to the paging configuration parameter of the first node cell; and
the first receiving unit is further configured to:
receive a paging message in the first node cell within the paging time determined by the determining unit, wherein the paging message is used to indicate that a system message of a first node is updated or used to instruct the user equipment to receive the system message of the first node cell.

29. The user equipment according to any one of claims 23 to 28, wherein the second receiving unit is further configured to:
receive an updated system message of the second node cell or a system message of the second node cell in the second node cell according to the first message.

30. The user equipment according to any one of claims 23 to 29, wherein
the user equipment camps on the second node cell corresponding to the second node.

31. The user equipment according to any one of claims 23 to 30, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

32. The user equipment according to claim 23, 30, or 31, wherein
the user equipment receives the system message of the first node cell; and/or
the user equipment measures the first node cell.

33. User equipment, comprising:
a receiving unit, configured to receive a fifth message sent by a second node and first node information, wherein the fifth message is used to page the user equipment, or used to instruct the user equipment to access a network, or used to instruct the user equipment to establish a radio resource control RRC connection, and the first node information is used to provide information about a first node to the user equipment; and
an access unit, configured to access the first node according to the first node information and the fifth message received by the receiving unit.

34. The user equipment according to claim 33, wherein the first node information comprises at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

35. The user equipment according to claim 33, wherein the first node information comprises an identifier of a first node cell or an identifier of the first node, and the first node information is comprised in a second message.

36. The user equipment according to claim 35, wherein the access unit is specifically configured to access the first node according to the fifth message and the first node information in the following manner:
determining the first node cell according to the identifier of the first node or the identifier of the first node cell that is comprised in the fifth message;
listening to a system message of the first node cell in the first node cell;
obtaining an access configuration of the first node according to the received system message of the first node cell; and
accessing the first node according to the obtained access configuration of the first node.

37. The user equipment according to claim 34 or 35, wherein the first node information comprises the access configuration of the first node, and the access configuration of the first node is comprised in the second message.

38. The user equipment according to claim 37, wherein the access unit is specifically configured to access the first node according to the fifth message and the first node information in the following manner:
determining, according to the fifth message, that the user equipment is paged, or is paged to access a network, or is paged to establish an RRC connection; and
accessing the first node according to the access configuration of the first node comprised in the second message.

39. The user equipment according to claim 37, wherein the access unit is specifically configured to access the first node according to the fifth message and the first node information in the following manner:
determining, according to the identifier of the first node cell or the identifier of the first node that is comprised in the fifth message, that a node that the user equipment needs to access is the first node corresponding to the identifier of the first node cell or the identifier of the first node; and
accessing the first node according to the access configuration of the first node comprised in the second message.

40. The user equipment according to claim 37, wherein the access unit is specifically configured to access the first node according to the fifth message and the first node information in the following manner:
determining, according to the fifth message, that the user equipment is paged, or is paged to access a network, or is paged to establish an RRC connection;
receiving the second message, wherein the second message comprises the access configuration of the first node; and
accessing the first node according to the access configuration of the first node comprised in the second message.

41. The user equipment according to claim 35 or 37, wherein the second message is the fifth message.

42. The user equipment according to any one of claims 33 to 41, wherein the fifth message is a paging message.

43. The user equipment according to claim 35 or 37, wherein the second message is sent to the user equipment by the first node, the second node, or a third node.

44. The user equipment according to any one of claims 33 to 43, wherein the user equipment camps on a second node cell corresponding to the second node.

45. The user equipment according to any one of claims 33 to 44, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

46. The user equipment according to claim 33, 44, or 45, wherein
the user equipment receives the system message of the first node cell; and/or
the user equipment measures the first node cell.

47. A message processing method, comprising:
determining, by a second node, a first message, wherein the first message is used to instruct user equipment to receive a system message of a first node cell or used to indicate that a system message of a first node cell is updated; and
sending, by the second node, the first message to the user equipment.

48. The method according to claim 47, wherein the first message comprises at least one of the following:
a paging configuration parameter of the first node cell, an identifier of a first node, an identifier of the first node cell, a system message indicator of the first node cell, system message content of the first node cell, or updated system message content of the first node cell.

49. The method according to claim 47 or 48, wherein the first message is a configuration message, a paging message, or a system message.

50. The method according to claim 47, wherein the first message is a paging message, and the paging message comprises at least one of the following:
an identifier of a first node, an identifier of the first node cell, or a system message indicator of the first node cell.

51. The method according to any one of claims 47 to 50, wherein the first message is a paging message; and
before the sending, by the second node, the first message to the user equipment, the method further comprises:
sending, by the second node, a fourth message to the user equipment, wherein the fourth message comprises a paging configuration parameter.

52. The method according to claim 47, wherein the first message is a configuration message or a system message, and the configuration message or the system message comprises a paging configuration parameter of the first node cell.

53. The method according to claim 47, wherein the first message is further used to:
indicate that a system message of a second node cell is updated, or used to instruct the user equipment to receive a system message of a second node cell.

54. The method according to any one of claims 47 to 53, wherein before the determining, by a second node, a first message, the method further comprises:
receiving, by the second node, a third message sent by the first node, wherein the third message is used to indicate that the system message of the first node cell is updated, or used to instruct the user equipment to receive the system message of the first node cell.

55. The method according to claim 54, wherein the third message comprises at least one of: the paging configuration parameter of the first node cell, the identifier of the first node, the identifier of the first node cell, the system message indicator of the first node cell, the system message content of the first node cell, or the updated system message content of the first node cell.

56. The method according to any one of claims 47 to 55, wherein the user equipment camps on the second node cell corresponding to the second node.

57. The method according to any one of claims 47 to 56, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

58. The method according to claim 47, 56, or 57, wherein
the user equipment receives the system message of the first node cell; and/or
the user equipment measures the first node cell.

59. A message processing method, comprising:
determining, by a second node, first node information and a fifth message, wherein the fifth message is used to page the user equipment, or used to instruct the user equipment to access a network, or used to instruct the user equipment to establish a radio resource control RRC connection, and the first node information is used to provide information about a first node to the user equipment; and
sending, by the second node, the first node information and the fifth message to the user equipment.

60. The method according to claim 59, wherein the first node information comprises at least one of: an identifier of a first node cell, an identifier of the first node, an access configuration of a first node cell, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

61. The method according to claim 59, wherein the first node information comprises an identifier of a first node cell or an identifier of the first node, and the first node information is comprised in a second message.

62. The method according to claim 59 or 61, wherein the first node information comprises an access configuration of the first node, and the access configuration of the first node is comprised in the second message that is sent to the user equipment by the second node.

63. The method according to claim 61 or 62, wherein the second message is the fifth message.

64. The method according to any one of claims 59 to 63, wherein the fifth message is a paging message.

65. The method according to claim 61 or 62, wherein the second message comprises:
a radio resource control RRC connection reconfiguration message or a system message.

66. The method according to any one of claims 59 to 65, wherein the user equipment camps on a second node cell corresponding to the second node.

67. The method according to any one of claims 59 to 66, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

68. The method according to claim 59, 66, or 67, wherein
the user equipment receives a system message of the first node cell; and/or
the user equipment measures the first node cell.

69. A message processing method, comprising:
receiving, by user equipment, a first message sent by a second node, wherein the first message is used to instruct the user equipment to receive a system message of a first node cell; and
receiving, by the user equipment, the system message of the first node cell according to the first message; or
receiving, by user equipment, a first message sent by a second node, wherein the first message is used to instruct the user equipment to receive an updated system message of a first node cell; and
receiving, by the user equipment, the updated system message of the first node cell according to the first message.

70. The method according to claim 69, wherein the first message comprises at least one of: a paging configuration parameter of the first node cell, an identifier of a first node, an identifier of the first node cell, a system message indicator of the first node cell, system message content of the first node cell, or updated system message content of the first node cell.

71. The method according to claim 69 or 70, wherein the first message is a configuration message, a paging message, or a system message.

72. The method according to claim 69, wherein the first message is a paging message, and the paging message comprises at least one of the following: an identifier of a first node, an identifier of the first node cell, or a system message indicator of the first node cell; and
the user equipment receives the system message of the first node cell or the updated system message of the first node cell in the first node cell according to the paging message.

73. The method according to any one of claims 69 to 72, wherein the first message is a paging message; and
before the receiving, by the user equipment, the system message of the first node cell or receiving the updated system message of the first node cell according to the first message, the method further comprises:
receiving, by the user equipment, a fourth message sent by the second node, wherein the fourth message comprises the paging configuration parameter of the first node cell;
determining a paging time according to the paging configuration parameter of the first node cell; and
receiving, by the user equipment, a paging message in a second node cell within the paging time, wherein the paging message is used to indicate that a system message of the first node is updated or used to instruct the user equipment to receive the system message of the first node cell.

74. The method according to claim 69, wherein the first message is a configuration message or a system message, and the configuration message or the system message comprises a paging configuration parameter of the first node cell; and
before the receiving, by the user equipment, the system message of the first node cell or receiving the updated system message of the first node cell according to the first message, the method further comprises:
determining a paging time according to the paging configuration parameter of the first node cell; and
receiving, by the user equipment, a paging message in the first node cell within the paging time, wherein the paging message is used to indicate that a system message of a first node is updated or used to instruct the user equipment to receive the system message of the first node cell.

75. The method according to any one of claims 69 to 74, wherein the method further comprises:
receiving, by the user equipment, an updated system message of the second node cell or a system message of the second node cell in the second node cell according to the first message.

76. The method according to any one of claims 69 to 75, wherein
the user equipment camps on the second node cell corresponding to the second node.

77. The method according to any one of claims 69 to 76, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

78. The method according to claim 69, 76, or 77, wherein
the user equipment receives the system message of the first node cell; and/or
the user equipment measures the first node cell.

79. A message processing method, comprising:
receiving, by user equipment, a fifth message sent by a second node and first node information, wherein the fifth message is used to page the user equipment, or used to instruct the user equipment to access a network, or used to instruct the user equipment to establish a radio resource control RRC connection, and the first node information is used to provide information about a first node to the user equipment; and
accessing, by the user equipment, the first node according to the first node information and the fifth message.

80. The method according to claim 79, wherein the first node information comprises at least one of: an identifier of a first node cell, an identifier of the first node, an access configuration of the first node, an RRC configuration of the first node, a Packet Data Convergence Protocol PDCP configuration of the first node, a Radio Link Control layer protocol RLC configuration of the first node, a Media Access Control MAC configuration of the first node, or a physical layer configuration of the first node.

81. The method according to claim 79, wherein the first node information comprises an identifier of a first node cell or an identifier of the first node, and the first node information is comprised in a second message.

82. The method according to claim 81, wherein the accessing, by the user equipment, the first node according to the fifth message and the first node information comprises:
determining, by the user equipment, the first node cell according to the identifier of the first node or the identifier of the first node cell that is comprised in the fifth message;
listening, by the user equipment, to a system message of the first node cell in the first node cell;
obtaining, by the user equipment, an access configuration of the first node according to the received system message of the first node cell; and
accessing, by the user equipment, the first node according to the obtained access configuration of the first node.

83. The method according to claim 80 or 81, wherein the first node information comprises the access configuration of the first node, and the access configuration of the first node is comprised in the second message.

84. The method according to claim 83, wherein the accessing, by the user equipment, the first node according to the fifth message and the first node information comprises:
determining, by the user equipment according to the fifth message, that the user equipment is paged, or is paged to access a network, or is paged to establish an RRC connection; and
accessing, by the user equipment, the first node according to the access configuration of the first node comprised in the second message.

85. The method according to claim 83, wherein the accessing, by the user equipment, the first node according to the fifth message and the first node information comprises:
determining, by the user equipment according to the identifier of the first node cell or the identifier of the first node that is comprised in the fifth message, that a node that the user equipment needs to access is the first node corresponding to the identifier of the first node cell or the identifier of the first node; and
accessing, by the user equipment, the first node according to the access configuration of the first node comprised in the second message.

86. The method according to claim 83, wherein the accessing, by the user equipment, the first node according to the fifth message and the first node information comprises:
determining, by the user equipment according to the fifth message, that the user equipment is paged, or is paged to access a network, or is paged to establish an RRC connection;
receiving, by the user equipment, the second message sent by the second node, wherein the second message comprises the access configuration of the first node; and
accessing, by the user equipment, the first node according to the access configuration of the first node comprised in the second message.

87. The method according to claim 81 or 83, wherein the second message is the fifth message.

88. The method according to any one of claims 79 to 87, wherein the fifth message is a paging message.

89. The method according to claim 81 or 83, wherein the second message is sent to the user equipment by the first node, the second node, or a third node.

90. The method according to any one of claims 79 to 89, wherein the user equipment camps on a second node cell corresponding to the second node.

91. The method according to any one of claims 79 to 90, wherein
the user equipment receives a paging message only from the second node cell corresponding to the second node; or
the user equipment receives a paging message in the second node cell corresponding to the second node, and the user equipment receives a paging message in the first node cell, wherein
the paging message that is received by the user equipment in the first node cell comprises at least one of the following:
a paging message used to notify a first earthquake and tsunami warning system ETWS related notification and/or a second ETWS related notification; or
a paging message used to announce a commercial mobile alert service CMAS notification.

92. The method according to claim 79, 90, or 91, wherein
the user equipment receives the system message of the first node cell; and/or
the user equipment measures the first node cell.
